(19)

Europäisches Patentamt
European Patent Office
Office européen des brevets

(11)     EP 1 661 943 B1

(12)                              EUROPEAN PATENT SPECIFICATION

| | |
|---|---|
| (45) Date of publication and mention of the grant of the patent: **08.07.2009 Bulletin 2009/28** | (51) Int Cl.: *C08J 9/28* (2006.01)     *B01D 67/00* (2006.01) |
| (21) Application number: **04772527.0** | (86) International application number: **PCT/JP2004/012571** |
| (22) Date of filing: **31.08.2004** | (87) International publication number: **WO 2005/023919 (17.03.2005 Gazette 2005/11)** |

(54) **METHOD FOR PRODUCING MICRO-POROUS FILM OF THERMOPLASTIC RESIN**

VERFAHREN ZUR HERSTELLUNG EINER MIKROPORÖSEN FOLIE AUS THERMOPLASTISCHEM HARZ

PROCEDE PERMETTANT DE PRODUIRE UN FILM MICROPOREUX DE RESINE THERMOPLASTIQUE

(84) Designated Contracting States:
**DE FR GB**

(30) Priority:  **05.09.2003  JP 2003314039**
             **05.09.2003  JP 2003314040**

(43) Date of publication of application:
**31.05.2006  Bulletin 2006/22**

(73) Proprietor: **Tonen Chemical Corporation**
**Minato-Ku,**
**Tokyo 105-8572 (JP)**

(72) Inventors:
  • **SUZUKI, Sadakatsu**
    **Kawaguchi-shi, Saitama 3320015 (JP)**
  • **KIMISHIMA, Kotaro,**
    **504, 3-2, Shiomidai 1-chome**
    **Kanagawa 2350022 (JP)**
  • **TAKITA, Kotaro,**
    **405, 116-3, Setogaya-cho**
    **Kanagawa 2400024 (JP)**

(74) Representative: **Strehl Schübel-Hopf & Partner**
**Maximilianstrasse 54**
**80538 München (DE)**

(56) References cited:
**EP-A1- 1 153 969          EP-A1- 1 300 436**
**JP-A- 8 127 667           JP-A- 2001 081 229**
**JP-A- 2002 256 099        JP-A- 2003 082 151**

  • **DATABASE WPI Week 197521 Derwent Publications Ltd., London, GB; AN 1975-35034W XP002407247 -& JP 49 113859 A (KURARAY CO LTD) 30 October 1974 (1974-10-30)**

**Description**

FIELD OF THE INVENTION

The present invention relates to a method for producing a microporous thermoplastic resin membrane, particularly to a method for producing a microporous thermoplastic resin membrane while suppressing the evaporation of a washing solvent used for removing a membrane-forming solvent and the shrinkage of the membrane.

BACKGROUND OF THE INVENTION

Microporous thermoplastic resin membranes are widely used for various applications such as battery separators, electrolytic capacitor membranes, various filters, moisture-permeable, waterproof clothes, reverse osmosis filtration membranes, ultrafiltration membranes, microfiltration membranes, etc.

Solvents or plasticizers are used in the production of microporous thermoplastic resin membranes by wet methods, and they should be removed from membranes formed from gel-like moldings to prevent them from remaining in final products. To remove solvents or plasticizers added for forming membranes (membrane-forming solvents), gel-like moldings are usually washed with volatile solvents such as methylene chloride, and dried by a hot wind. However, because the microporous membranes shrink by interface tension between the washing solvents evaporated during drying by a hot wind and micro-pore walls, the microporous membranes have reduced porosity and permeability.

Thus, drying has conventionally been conducted by blowing a hot wind to the gel-like moldings held by tenters, or bringing them to contact with multi-stage heating rolls. Particularly when a washing solvent such as high-volatility methylene chloride is removed in the tentering method, however, it is impossible to grip the microporous membranes without damage because of too large shrinkage of the microporous membranes. In addition, a large amount of a hot wind is needed in this method. In the multi-stage heating-roll method, on the other hand, small-diameter rolls are usually used, causing the problem that the microporous membranes shrink in a width direction in roll gaps. There is a drying method comprising a combination of the multi-stage heating roll method and the hot wind-blowing method, it is difficult to recover the washing solvent by simple cooling condensation because of vigorous evaporation of the washing solvent. In addition, when washing solvents likely to cause environmental contamination, such as methylene chloride, are used in any methods, their leakage should be prevented.

As a method for producing a microporous membrane while suppressing shrinkage during drying, JP2002-256099A proposes a method using a washing solvent having a surface tension of 24 mN/m or less at a temperature of 25°C. The use of such washing solvent suppresses the shrinkage of a network structure, which is caused by tension in a gas-liquid interface in micropores during drying. However, because the microporous membranes are dried by heating or wind, there is a problem of a slow speed of removing the washing solvents. There is further a problem that the evaporated washing solvents tend to leak outside a production line.

JP2003-82151 A proposes a method for removing a washing solvent while conveying a gel-like molding by a suction roll in the production of a microporous membrane. This method can prevent the washing solvent from escaping by evaporation. Particularly when the gel-like molding is sucked in a poor solvent to the washing solvent, a high removing effect of the washing solvent can be achieved. However, this method is disadvantageous in providing the microporous membrane with spots by suction grooves or apertures of a roll (suction spots).

OBJECT OF THE INVENTION

Accordingly, an object of the present invention is to provide a method for quickly producing a microporous thermoplastic resin membrane having excellent appearance, while suppressing the evaporation of a washing solvent used for removing a membrane-forming solvent and the shrinkage of the membrane.

DISCLOSURE OF THE INVENTION

As a result of intense research in view of the above object, the inventors have found that (a) by using a low-surface-tension, low-water-solubility washing solvent to remove a membrane-forming solvent, and by using warm water to remove the washing solvent remaining in the washed molding, it is possible to quickly produce a microporous thermoplastic resin membrane having excellent appearance while suppressing the evaporation of the washing solvent and the shrinkage of the membrane, and that (b) when the poor solvent is caused to pass through the washed molding by the suction means to remove the washing solvent, in a state that the washed molding is in contact with a poor solvent to the washing solvent, after the membrane-forming solvent is removed by the washing solvent, it is possible to quickly produce a microporous thermoplastic resin membrane having excellent appearance while suppressing the evaporation of the washing solvent and the shrinkage of the membrane by adjusting contact time between the washed molding and a suction means. The present invention has been completed based on such findings.

Thus, the first method of the present invention for producing a microporous thermoplastic resin membrane comprises the steps of extruding a solution obtained by melt-blending a thermoplastic resin and a membrane-forming solvent through a die, cooling an extrudate to form a gel-like molding, removing the membrane-forming solvent from the gel-like molding by a washing solvent, and removing the washing solvent, the washing solvent having (a) a surface tension of 24 mN/m or less at a temperature of 25°C, (b) a boiling point of 100°C or lower at the atmospheric pressure, and (c) a solubility of 600 ppm (on a mass basis) or less in water at a temperature of 16°C; and the washing solvent remaining in the washed molding being removed by using warm water.

The lower limit temperature of warm water is preferably the boiling point of the washing solvent (called "washing solvent A" unless otherwise mentioned) - 5°C or higher, more preferably the boiling point or higher, particularly the boiling point + 3°C or higher. The upper limit temperature of warm water is preferably equal to or lower than the crystal dispersion temperature of the thermoplastic resin, more preferably equal to or lower than the crystal dispersion temperature - 5°C. The removal of the washing solvent A from a molding after washing (called "washed molding" unless otherwise mentioned) can be carried out by a method of showering warm water onto the washed molding, a method of immersing the washed molding in warm water, or their combined methods. The method of showering warm water onto the washed molding preferably comprises showering the warm water onto a portion of the washed molding engaging a roll while continuously conveying the washed molding by the roll. The method of immersing the washed molding in warm water preferably comprises vibrating the washed molding in the warm water, or immersing at least a portion of the washed molding engaging a roll while continuously conveying the washed molding by the roll. The contact time of the washed molding with warm water is preferably 15 seconds or less.

To obtain a microporous thermoplastic resin membrane having excellent properties, the washing solvent A preferably meets the following conditions (1)-(11).

(1) It has a surface tension of 20 mN/m or less at a temperature of 25°C.

(2) It has a boiling point of 80°C or lower at the atmospheric pressure.

(3) It has solubility of 300 ppm (on a mass basis) or less in water at a temperature of 16°C.

(4) It is at least one selected from the group consisting of hydrofluorocarbons, hydrofluoroethers, perfluorocarbons, perfluoroethers, $n$-paraffins having 5-7 carbon atoms, isoparaffins having 5-7 carbon atoms, and cycloparaffins having 5-7 carbon atoms.

(5) The hydrofluorocarbon described in (4) above is a linear hydrofluorocarbon represented by the composition formula of $C_5H_2F_{10}$.

(6) The hydrofluoroether described in (4) above is a compound represented by the composition formula of $C_4F_9OCH_3$ or $C_4F_9OC_2H_5$.

(7) The perfluorocarbon described in (4) above is a compound represented by the composition formula of $C_6F_{14}$ or $C_7F_{16}$.

(8) The perfluoroether described in (4) above is a compound represented by the composition formula of $C_4F_9OCF_3$ or $C_4F_9OC_2F_5$.

(9) The $n$-paraffin having 5-7 carbon atoms described in (4) above is at least one selected from the group consisting of $n$-pentane, $n$-hexane and $n$-heptane.

(10) The isoparaffin having 5-7 carbon atoms described in (4) above is at least one selected from the group consisting of 2-methylpentane, 3-methylpentane, 2,2-dimethylbutane, 2,3-dimethylbutane, 2-methylhexane, 3-methylhexane, 3-ethylpentane, 2,2-dimethylpentane, 2,3-dimethylpentane, 2,4-dimethylpentane, 3,3-dimethylpentane, and 2,2,3-trimethylbutane.

(11) The cycloparaffin having 5-7 carbon atoms described in (4) above is at least one selected from the group consisting of cyclopentane, cyclohexane and methylcyclopentane.

The removal of the membrane-forming solvent by the washing solvent can be conducted by two or more steps. In this case, as long as the washing solvent A is used at least in a final step, a washing solvent other than the washing solvent A (called "washing solvent B" unless otherwise mentioned) may be used. The washing solvent A may be used alone, or both of the washing solvent A and the washing solvent B may be used. The washing stage is not restricted to two steps but may be 3 or more steps. The number of steps in the washing stage may be about 7 at most.

The washing solvent B preferably meets the following conditions (12)-(25).

(12) It is at least one selected from the group consisting of methylene chloride, carbon tetrachloride, ethane trifluoride, methyl ethyl ketone, pentane, hexane, heptane, diethyl ether and dioxane.

(13) It is a nonaqueous solvent having a boiling point of 100°C or higher and a flashpoint of 0°C or higher.

(14) The nonaqueous solvent described in (13) above is at least one selected from the group consisting of $n$-paraffins having 8 or more carbon atoms; $n$-paraffins having 5 or more carbon atoms, at least part of whose hydrogen atoms are substituted by halogen atoms; isoparaffins having 8 or more carbon atoms; cycloparaffins having 7 or more carbon atoms; cycloparaffins having 5 or more carbon atoms, at least part of whose hydrogen atoms are substituted by halogen atoms; aromatic hydrocarbons having 7 or more carbon atoms, aromatic hydrocarbons having 6 or more carbon atoms, at least part of whose hydrogen atoms are substituted by halogen atoms; alcohols having 5-10 carbon atoms, part of whose hydrogen atoms may be substituted by halogen atoms; esters having 5-14 carbon atoms, part of whose hydrogen atoms may be substituted by halogen atoms; ethers having 4-14 carbon atoms, part of whose hydrogen atoms may be substituted by halogen atoms; and ketones having 5-10 carbon atoms.

(15) The *n*-paraffin having 8 or more carbon atoms described in (14) above more preferably has 8-12 carbon atoms, specifically at least one selected from the group consisting of *n*-octane, *n*-nonane, *n*-decane, *n*-undecane and *n*-dodecane.

(16) The *n*-paraffin having 5 or more carbon atoms, at least part of whose hydrogen atoms are substituted by halogen atoms, which is described in (14) above, is at least one selected from the group consisting of 1-chloropentane, 1-chlorohexane, 1-chloroheptane, 1-chlorooctane, 1-bromopentane, 1-bromohexane, 1-bromoheptane, 1-bromooctane, 1,5-dichloropentane, 1,6-dichlorohexane and 1,7-dichloroheptane.

(17) The isoparaffin having 8 or more carbon atoms, which is described in (14) above, is at least one selected from the group consisting of 2,3,4-trimethylpentane, 2,2,3-trimethylpentane, 2,2,5-trimethylhexane, 2,3,5-trimethylhexane, 2,3,5-trimethylheptane and 2,5,6-trimethyloctane.

(18) The cycloparaffin having 7 or more carbon atoms described in (14) above is at least one selected from the group consisting of cycloheptane, cyclooctane, methylcyclohexane, cis- and trans-1,2-dimethylcyclohexane, cis- and trans-1,3-dimethylcyclohexane, and cis- and trans-1,4-dimethylcyclohexane.

(19) The cycloparaffin having 5 or more carbon atoms, part of whose hydrogen atoms are substituted by halogen atoms, which is described in (14) above, is at least one selected from the group consisting of chlorocyclopentane and chlorocyclohexane.

(20) The aromatic hydrocarbon having 7 or more carbon atoms described in (14) above is at least one selected from the group consisting of toluene, *o*-xylene, *m*-xylene and *p*-xylene.

(21) The aromatic hydrocarbon having 6 or more carbon atoms, part of whose hydrogen atoms are substituted by halogen atoms, which is described in (14) above, is at least one selected from the group consisting of chlorobenzene, 2-chlorotoluene, 3-chlorotoluene, 4-chlorotoluene, 3-chloro-*o*-xylene, 4-chloro-*o*-xylene, 2-chloro-*m*-xylene, 4-chloro-*m*-xylene, 5-chloro-*m*-xylene, and 2-chloro-*p*-xylene.

(22) The alcohol having 5-10 carbon atoms, part of whose hydrogen atoms may be substituted by halogen atoms, which is described in (14) above, is at least one selected from the group consisting of isopentyl alcohol, *tert*-pentyl alcohol, cyclopentanol, cyclohexanol, 3-methoxy-1-butanol, 3-methoxy-3-methyl-1-butanol, propylene glycol *n*-butyl ether, and 5-chloro-1-pentanol.

(23) The ester having 5-14 carbon atoms, part of whose hydrogen atoms may be substituted by halogen atoms, which is described in (14) above, is at least one selected from the group consisting of diethyl carbonate, diethyl maleate, *n*-propyl acetate, *n*-butyl acetate, isopentyl acetate, 3-methoxybutyl acetate, 3-methoxy-3-methylbutyl acetate, ethyl *n*-butyrate, ethyl *n*-valerate, and 2-chloroethyl acetate.

(24) The ether having 4-14 carbon atoms, part of whose hydrogen atoms may be substituted by halogen atoms, which is described in (14) above, is at least one selected from the group consisting of *n*-butyl ether, diisobutyl ether, and bischloroethyl ether.

(25) The ketone described in (14) above, which has 5-10 carbon atoms, is at least one selected from the group consisting of 2-pentanone, 3-pentanone, 2-hexanone, 3-hexanone, cyclopentanone, and cyclohexanone.

The second method of the present invention for producing a microporous thermoplastic resin membrane comprises the steps of extruding a solution obtained by melt-blending a thermoplastic resin and a membrane-forming solvent through a die, cooling an extrudate to form a gel-like molding, removing the membrane-forming solvent from the gel-like molding by a washing solvent, and causing a poor solvent to the washing solvent to pass through the washed molding by a suction means to remove the washing solvent in a state that the washed molding is in contact with the poor solvent, the contact time *t* (seconds) of the washed molding with the suction means being in a range meeting the following general formula (1):

$$t \leq (100\text{-}T)^3/(1,100 \times P^{0.5} \times \log L) \ldots (1),$$

wherein T is the temperature (°C) of the poor solvent, P is a suction pressure (kPa), and L is the size of penetrating apertures of the suction means for sucking the washing solvent [diameter ($\mu$m) of the largest circle inscribed in the penetrating apertures].

The contact time of the washed molding with the suction means is preferably 0.05 seconds or more, more preferably 0.2 seconds or more. The suction means is preferably at least one selected from the group consisting of a suction roll, a wire roll, a slit roll and a punched roll, particularly the wire roll. The size of the penetrating apertures is preferably 10-5,000 $\mu$m, more preferably 20-2,000 $\mu$m, particularly 50-500 $\mu$m. The suction pressure is preferably 0.5-60 kPa, more preferably 1-40 kPa, particularly 3-20 kPa. The temperature of the poor solvent is preferably from the boiling point of the washing solvent - 10°C to the boiling point + 50°C, more preferably from the boiling point of the washing solvent to the boiling point +50°C, particularly from the boiling point of the washing solvent + 3°C to the boiling point + 50°C. The poor solvent is preferably water.

The contact of the washed molding with the poor solvent is preferably conducted by a method of showering the poor solvent onto a portion of the washed molding engaging the roll, a method of immersing at least a portion of the washed molding engaging the roll in the poor solvent, or their combined methods.

The thermoplastic resin preferably meets the following conditions (26)-(35).

(26) It is at least one selected from the group consisting of polyolefins, polyesters, polyamides, polyarylene ethers and polyarylene sulfides.

(27) The polyolefins described in (26) above are polyethylene or polyethylene compositions.

(28) The polyethylene described in (27) above has a mass-average molecular weight of $1 \times 10^4$ to $5 \times 10^6$.

(29) The polyethylene described in (28) above has a mass-average molecular weight of $1 \times 10^5$ to $4 \times 10^6$.

(30) The polyethylene described in any of (27)-(29) above is at least one selected from the group consisting of ultra-high-molecular-weight polyethylene, high-density polyethylene, intermediate-density polyethylene, and low-density polyethylene.

(31) The polyethylene described in any of (27)-(30) above is ultra-high-molecular-weight polyethylene having a mass-average molecular weight of $5 \times 10^5$ or more.

(32) In the polyethylene described in any of (27)-(31) above, a ratio Mw/Mn (molecular weight distribution) of a mass-average molecular weight (Mw) to a number-average molecular weight (Mn) is 5-300.

(33) The polyethylene composition described in (27) above comprises ultra-high-molecular-weight polyethylene as an indispensable component, and further comprises at least one selected from the group consisting of high-density polyethylene, intermediate-density polyethylene, and low-density polyethylene.

(34) The polyethylene composition described in (33) above comprises ultra-high-molecular-weight polyethylene having a mass-average molecular weight of $5 \times 10^5$ or more, and high-density polyethylene having a mass-average molecular weight of $1 \times 10^4$ or more to less than $5 \times 10^5$.

(35) The polyethylene composition described in (33) or (34) above comprises as an optional component at least one polyolefin selected from the group consisting of polypropylene having a mass-average molecular weight of $1 \times 10^4$ to $4 \times 10^6$, polybutene-1 having a mass-average molecular weight of $1 \times 10^4$ to $4 \times 10^6$, polyethylene wax having a mass-average molecular weight of $1 \times 10^3$ to $4 \times 10^4$, and an ethylene $\alpha$-olefin copolymer having a mass-average molecular weight of $1 \times 10^4$ to $4 \times 10^6$.

BRIEF DESCRIPTION OF THE DRAWINGS

Fig. 1 is a photograph showing the appearance of the microporous membrane of Example 1.

Fig. 2 is a photograph showing the appearance of the microporous membrane of Comparative Example 2.

DESCRIPTION OF THE PREFERRED EMBODIMENTS

[1] thermoplastic resin

Thermoplastic resins usable in the production of the microporous thermoplastic resin membrane of the present invention include polyolefins, polyesters, polyamides, polyarylene ethers and polyarylene sulfides. Among them, polyolefins are preferable. Polyolefins may be polyolefin alone or compositions comprising two or more polyolefins.

The polyolefins may be polymers of ethylene, propylene, butene-1, pentene-1, hexene-1, 4-methylpentene-1, octene, acetate vinyl, methyl methacrylate, styrene, etc. or their copolymers. Among them, polyethylene is preferable as the polyolefin. Though not particularly restricted, the mass-average molecular weight of polyethylene is usually $1 \times 10^4$ to $1 \times 10^7$, preferably $1 \times 10^4$ to $5 \times 10^6$, more preferably $1 \times 10^5$ to $4 \times 10^6$.

The polyethylene includes ultra-high-molecular-weight polyethylene, high-density polyethylene, intermediate-density polyethylene, and low-density polyethylene. These types of polyethylene may be copolymers containing small amounts of other $\alpha$-olefins. The other $\alpha$-olefins than ethylene may be propylene, butene-1, pentene-1, hexene-1, 4-methylpentene-1, octene, vinyl acetate, methyl methacrylate, styrene, etc. Among them, ultra-high-molecular-weight polyethylene is preferable. The mass-average molecular weight of ultra-high-molecular-weight polyethylene is preferably $5 \times 10^5$ or more, more preferably $1 \times 10^6$ to $15 \times 10^6$, particularly $1 \times 10^6$ to $5 \times 10^6$.

In any case of polyethylene alone or a composition of two or more types of polyethylene, an Mw/Mn ratio (molecular weight distribution) of its mass-average molecular weight (Mw) to its number-average molecular weight (Mn) is preferably in a range of 5-300, more preferably in a range of 10-100, though not restricted. To adjust the molecular weight distribution, the polyethylene may be produced by a multi-stage polymerization, though not restrictive. Of course, single-stage polymerized polyethylene may be used.

The polyolefin compositions comprise preferably polyethylene, more preferably the above ultra-high-molecular-weight polyethylene, as an indispensable component. The polyolefin composition comprising the above ultra-high-molecular-weight polyethylene as an indispensable component comprises preferably at least one selected from the group consisting of high-density polyethylene, intermediate-density polyethylene, and low-density polyethylene, more preferably high-density polyethylene. The mass-average molecular weights of high-density polyethylene, intermediate-density polyethylene and low-density polyethylene are preferably $1 \times 10^4$ or more to less than $5 \times 10^5$.

The polyolefin composition comprising the above ultra-high-molecular-weight polyethylene as an indispensable component may contain at least one polyolefin selected from the group consisting of polypropylene having a mass-average molecular weight of $1 \times 10^4$ to $4 \times 10^6$, polybutene-1 having a mass-average molecular weight of $1 \times 10^4$ to $4 \times 10^6$, polyethylene wax having a mass-average molecular weight of $1 \times 10^3$ to $4 \times 10^4$, and an ethylene·$\alpha$-olefin copolymer having a mass-average molecular weight of $1 \times 10^4$ to $4 \times 10^6$ as an optional component. The amount of these optional polyolefins is preferably 80 parts by mass or less per 100 parts by mass of the entire polyolefin composition.

[2] Production method of microporous thermoplastic resin membrane

Any of the first and second production methods of the present invention comprises a step (1) of melt-blending a mixture of the above thermoplastic resin and a membrane-forming solvent to prepare a thermoplastic resin solution, a step (2) of extruding the thermoplastic resin solution through a die lip and cooling the resultant extrudate to form a gel-like molding, a step (3) of removing the membrane-forming solvent by a washing solvent, and a step (4) of removing the washing solvent from the resultant membrane. A stretching step may be conducted before and/or after the step (3), if necessary. After the steps (1)-(4), a membrane-drying step, a cross-linking step with ionizing radiation, a heat-treating step, a hydrophilizing step, a coating step, etc. may be conducted. The first and second production methods will be explained below in this order.

(A) First production method

(1) Step of preparing thermoplastic resin solution

After a proper membrane-forming solvent is added to a thermoplastic resin, a thermoplastic resin solution is prepared by melt-blending. The thermoplastic resin solution may contain various additives such as antioxidants, ultraviolet absorbers, antiblocking agents, pigments, dyes, inorganic fillers, etc. in a range not deteriorating the effects of the present invention, if necessary. Fine silicate powder may be added as a pore-forming agent, for instance.

The membrane-forming solvent may be liquid solvents or solid solvents. The liquid solvents may be aliphatic or alicyclic hydrocarbons such as nonane, decane, decalin, p-xylene, undecane, dodecane, liquid paraffin, and mineral oil distillates having boiling points comparable to those of the above hydrocarbons. To obtain the gel-like molding having a stable solvent content, it is preferable to use a non-volatile liquid solvent such as liquid paraffin. The solid solvents are preferably those having melting points of 80°C or lower, such as paraffin waxes, ceryl alcohol, stearyl alcohol, dicyclohexyl phthalate, etc. The liquid solvent and the solid solvent may be used in combination.

The viscosity of the liquid solvent is preferably 30-500 cSt, more preferably 50-200 cSt at a temperature of 25°C. When this viscosity is less than 30 cSt, the thermoplastic resin solution is extruded through the die lip unevenly, and its blending is difficult. On the other hand, when the viscosity is more than 500 cSt, the removal of the liquid solvent is difficult.

Though not particularly restricted, the melt-blending is preferably uniform blending in an extruder. This method is suitable for preparing a high-concentration thermoplastic resin solution. The melting temperature is preferably in a range of the melting point of the thermoplastic resin +10°C to +100°C. Specifically, the melting temperature is preferably 140-230°C, more preferably 170-200°C. The melting point is determined by differential scanning calorimetry (DSC) according to JIS K7121. The membrane-forming solvent may be added before blending, or charged into the extruder in an intermediate portion during blending, though it is preferably added before blending to prepare the solution in advance. In the melt-blending, an antioxidant is preferably added to prevent the oxidation of the thermoplastic resin.

A ratio of the thermoplastic resin to the membrane-forming solvent in the thermoplastic resin solution is such that the thermoplastic resin is 1-50% by mass, preferably 20-40% by mass, per 100% by mass of their sums. When the thermoplastic resin is less than 1% by mass, large swelling or neck-in occurs at the die exit during the extrusion of the thermoplastic resin solution, resulting in decrease in the formability and self-support of the gel-like molding. On the other hand, when the thermoplastic resin is more than 50% by weight, the formability of the gel-like molding is deteriorated.

(2) Step of forming gel-like molding

The melt-blended thermoplastic resin solution is extruded through a die lip directly from the extruder or via another extruder, or via another extruder after once cooled and pelletized. The die lip used is usually a sheet-forming die having a rectangular-cross-section orifice, though a double-cylindrical hollow die lip having a circular orifice, an inflation die lip, etc. may also be used. In the case of the sheet-forming die, the gap of its die lip is usually 0.1 to 5 mm, and it is heated at 140-250°C during extrusion. The extrusion speed of the heated solution is preferably 0.2 to 15 m/minute.

The solution thus extruded through the die lip is formed into the gel-like molding by cooling. Cooling is preferably conducted at least to a gelation temperature or lower at a speed of 50°C/minute or more. Such cooling can set a separated phase structure, in which the thermoplastic resin phase is separated to micro-phases by the membrane-forming solvent. The cooling is conducted preferably to a temperature of 25°C or lower. Generally, the slower cooling speed provides the gel-like molding with larger pseudo-cell units, resulting in a coarser higher-order structure. On the other hand, the higher cooling speed results in denser cell units. The cooling speed less than 50°C/minute leads to increased crystallinity, making it unlikely to provide the gel-like molding with suitable stretchability. Usable as the cooling method are a method of bringing the gel-like molding into contact with a cooling medium such as cooling air, cooling water, etc., a method of bringing the gel-like molding into contact with a cooling roll, etc.

(3) Step of removing membrane-forming solvent

The membrane-forming solvent is removed from the above gel-like molding. The removal of the membrane-forming solvent uses a washing solvent (called "washing solvent A" unless otherwise mentioned), which has (a) a surface tension of 24 mN/m or less at a temperature of 25°C, (b) a boiling point of 100°C or lower at the atmospheric pressure, and (c) a solubility of 600 ppm (on a mass basis) or less in water at a temperature of 16°C, and which is not compatible with the thermoplastic resin.

With a surface tension of 24 mN/m or less at a temperature of 25°C, the washing solvent has a small interface tension with micropore walls, thereby suppressing the shrinkage and densification of the network structure in the subsequent step of removing the washing solvent with warm water. Accordingly, the microporous membrane is provided with improved porosity and permeability. The term "surface tension" used herein means a tension in an interface between a gas and a liquid, which is measured according to JIS K 3362. The surface tension of the washing solvent A at a temperature of 25°C is preferably 20 mN/m or less. Though the surface tension of the washing solvent A decreases as the temperature is elevated, a temperature range in which the washing solvent A is used is usually equal to or lower than its boiling point.

With a boiling point of 100°C or lower at the atmospheric pressure, the washing solvent can be removed quickly with warm water. When this boiling point is higher than 100°C, the removal of the washing solvent takes a long period of time, resulting in low production efficiency. If the removal of the washing solvent took a long period of time, the membrane would be provided with insufficient porosity and permeability because it is heated by warm water for a long period of time, even though the washing solvent has a surface tension of 24 mN/m or less at a temperature of 25°C. The boiling point of the washing solvent A at the atmospheric pressure is preferably 80°C or lower.

When the washing solvent has a solubility of 600 ppm (on a mass basis) or less in water at a temperature of 16°C, it is possible to prevent water spots (blister-like spots) from being formed on the microporous membrane during the removal of the washing solvent with warm water. This solubility is preferably 300 ppm (on a mass basis) or less. The solubility of the washing solvent A in water becomes higher as the temperature is elevated. However, as long as the solubility is 600 ppm (on a mass basis) or less at 16°C, the microporous membrane is free from water spots formed during the removal of the washing solvent with warm water.

Specific examples of the washing solvent A include, for instance, fluorides such as hydrofluorocarbons, hydrofluoroethers, perfluorocarbons, perfluoroethers, etc., *n*-paraffins having 5-7 carbon atoms, isoparaffins having 5-7 carbon atoms, cycloparaffins having 5-7 carbon atoms, etc.

The preferred fluoride is, for instance, at least one selected from the group consisting of a linear hydrofluorocarbon represented by the composition formula of $C_5H_2F_{10}$, a hydrofluoroether represented by the composition formula of $C_4F_9OCH_3$ or $C_4F_9OC_2H_5$, a perfluorocarbon represented by the composition formula of $C_6F_{14}$ or $C_7F_{16}$, and a perfluoroether represented by the composition formula of $C_4F_9OCF_3$ or $C_4F_9OC_2F_5$. Because these fluorides do not destroy ozone, they have little influence on environment even if they are freed outside a production line. Also, these fluorides are less likely to be exploded by ignition, because their flashpoints are 40°C or higher (some of them have no flashpoints).

*n*-Paraffins having 5-7 carbon atoms include *n*-pentane, *n*-hexane and *n*-heptane, preferably *n*-pentane. Isoparaffins having 5-7 carbon atoms include 2-methylpentane, 3-methylpentane, 2,2-dimethylbutane, 2,3-dimethylbutane, 2-methylhexane, 3-methylhexane, 3-ethylpentane, 2,2-dimethylpentane, 2,3-dimethylpentane, 2,4-dimethylpentane, 3,3-dimethylpentane, 2,2,3-trimethylbutane, etc. Cycloparaffins having 5-7 carbon atoms include cyclopentane, cyclohexane and methylcyclopentane, preferably cyclopentane having a surface tension of 24 mN/m or less at a temperature of 20°C.

Among those listed as examples of the washing solvent A, typical compounds are shown in Table 1 with respect to a surface tension, a boiling point and a solubility in water.

Table 1

| Composition Formula or Name of Compound | Surface Tension (mN/m) at 25°C | Boiling Point (°C) at Atmospheric Pressure | Solubility (ppm by mass) in Water |
|---|---|---|---|
| $C_4F_9OCH_3$ | 14 | 61 | 12 (25°C) |
| $C_4F_9OC_2H_5$ | 17 | 76 | < 20 (25°C) |
| $C_6F_{14}$ | 12 | 56 | ≤ 100 (25°C) |
| *n*-Pentane | 16 | 36 | 225 (16°C) |
| *n*-Hexane | 18 | 68.7 | 13 (16°C) |
| *n*-Heptane | 20 | 98.4 | Insoluble |
| Cyclopentane | 22 | 49.3 | 142 (16°C) |
| Cyclohexane | 24 | 80.7 | 52 (16°C) |

The washing solvent A may be properly selected depending on the type of the membrane-forming solvent. The washing solvent A may be used alone or in combination. As long as the washing solvent A meets the above requirements (a)-(c), it may contain other solvents not meeting some of the above requirements (a)-(c). Such mixture may be, for instance, a combination of at least one selected from the group consisting of the above fluorides, the above *n*-paraffins having 5-7 carbon atoms, the above isoparaffins having 5-7 carbon atoms and the above cycloparaffins having 5-7 carbon atoms, and a small amount of a cyclic hydrofluorocarbon represented by the composition formula of $C_5H_3F_7$, for instance, or an aliphatic ether, an aliphatic ketone, an aliphatic alcohol, an aliphatic ester, etc. each having a boiling point of 100°C or lower. Different washing solvents A may be used to conduct two or more washing steps.

Before using the washing solvent A, a washing solvent (called "washing solvent B" unless otherwise mentioned) other than the washing solvent A may be used to remove the membrane-forming solvent. With two or more washing steps using the washing solvents A and B properly selected depending on the type of the membrane-forming solvent, further improved washing effects can be obtained. The use of the washing solvent A in the final washing step can remove the washing solvent B used in the previous step, thereby preventing the shrinkage and densification of a network structure, which would occur in a subsequent step of removing the washing solvent with warm water. The treatment of the molding, from which the membrane-forming solvent has been removed by the washing solvent B, with the washing solvent A is called "rinsing treatment" hereinafter.

The washing solvent B need only have no compatibility with the thermoplastic resin, and its examples include nonaqueous solvents such as chlorinated hydrocarbons, fluorohydrocarbons, paraffins, aromatics, alcohols, esters, ether, ketones, etc.

Preferable among the above nonaqueous solvents are, for instance, chlorinated hydrocarbons such as methylene chloride, carbon tetrachloride, etc.; fluorohydrocarbons such as ethane trifluoride, etc.; ethers such as *n*-pentane diethyl ether, dioxane, etc.; methyl ethyl ketone, etc., which are generally used as solvents for removing the membrane-forming solvent.

The other preferred examples of the above nonaqueous solvents include those having surface tensions of 24 mN/m or less at any temperatures of 80°C or lower. The use of such nonaqueous solvent can suppress the shrinkage of the membrane, even when a relatively large amount of a nonaqueous solvent is evaporated from the membrane during washing. Such nonaqueous solvents include, for instance, *n*-pentane, hexane, heptane, ethane trifluoride, diethyl ether, 2-methylpentane, 3-methylpentane, cyclohexane, cyclopentane, acetone, methyl ethyl ketone, etc.

The other preferred examples of the above nonaqueous solvents include those having boiling points of 100°C or higher and flashpoints of 0°C or higher at the atmospheric pressure. Such nonaqueous solvents are usable safely, because they are less volatile with little influence on the environment and little likelihood of explosion by ignition. They are also easily condensed because of high boiling points, resulting in easy collection and recycling. The "flashpoint" is measured herein according to JIS K 2265. The above flashpoint is preferably 5°C or higher, more preferably 40°C or higher.

Preferable as the nonaqueous solvent having a boiling point of 100°C or higher and a flashpoint of 0°C or higher is at least one selected from the group consisting of *n*-paraffins having 8 or more carbon atoms; *n*-paraffins having 5 or more carbon atoms, at least part of whose hydrogen atoms are substituted by halogen atoms; isoparaffins having 8 or more carbon atoms; cycloparaffins having 7 or more carbon atoms; cycloparaffins having 5 or more carbon atoms, at least part of whose hydrogen atoms are substituted by halogen atoms; aromatic hydrocarbons having 7 or more carbon atoms, aromatic hydrocarbons having 6 or more carbon atoms, at least part of whose hydrogen atoms are substituted by halogen atoms, alcohols having 5-10 carbon atoms, part of whose hydrogen atoms may be substituted by halogen atoms; esters having 5-14 carbon atoms, part of whose hydrogen atoms may be substituted by halogen atoms; ethers having 4-14 carbon atoms, part of whose hydrogen atoms may be substituted by halogen atoms; and ketones having 5-10 carbon atoms.

$n$-Paraffins having 8 or more carbon atoms are preferably $n$-octane, $n$-nonane, $n$-decane, $n$-undecane and $n$-dodecane, more preferably $n$-octane, $n$-nonane and $n$-decane.

$n$-Paraffins having 5 or more carbon atoms, at least part of whose hydrogen atoms are substituted by halogen atoms, are preferably 1-chloropentane, 1-chlorohexane, 1-chloroheptane, 1-chlorooctane, 1-bromopentane, 1-bromohexane, 1-bromoheptane, 1-bromooctane, 1,5-dichloropentane, 1,6-dichlorohexane and 1,7-dichloroheptane, more preferably 1-chloropentane, 1-chlorohexane, 1-bromopentane and 1-bromohexane.

Isoparaffins having 8 or more carbon atoms are preferably 2,3,4-trimethylpentane, 2,2,3-trimethylpentane, 2,2,5-trimethylhexane, 2,3,5-trimethylhexane, 2,3,5-trimethylheptane and 2,5,6-trimethyloctane, more preferably 2,3,4-trimethylpentane, 2,2,3-trimethylpentane, 2,2,5-trimethylhexane and 2,3,5-trimethylhexane.

Cycloparaffins having 7 or more carbon atoms are preferably cycloheptane, cyclooctane, methylcyclohexane, cis- and trans-1,2-dimethylcyclohexane, cis- and trans-1,3-dimethylcyclohexane, and cis- and trans-1,4-dimethylcyclohexane, more preferably methylcyclohexane.

Cycloparaffins having 5 or more carbon atoms, at least part of whose hydrogen atoms are substituted by halogen atoms, are preferably chlorocyclopentane and chlorocyclohexane, preferably chlorocyclopentane.

Aromatic hydrocarbons having 7 or more carbon atoms are preferably toluene, o-xylene, m-xylene and p-xylene, more preferably toluene.

Aromatic hydrocarbons having atoms 6 or more carbon atoms, at least part of whose hydrogen atoms are substituted by halogen atoms, are preferably chlorobenzene, 2-chlorotoluene, 3-chlorotoluene, 4-chlorotoluene, 3-chloro-o-xylene, 4-chloro-o-xylene, 2-chloro-m-xylene, 4-chloro-m-xylene, 5-chloro-m-xylene, and 2-chloro-p-xylene, more preferably chlorobenzene, 2-chlorotoluene, 3-chlorotoluene, and 4-chlorotoluene.

Alcohols having 5-10 carbon atoms, part of whose hydrogen atoms may be substituted by halogen atoms, are preferably isopentyl alcohol, tert-pentyl alcohol, cyclopentanol, cyclohexanol, 3-methoxy-1-butanol, 3-methoxy-3-methyl-1-butanol, propylene glycol $n$-butyl ether and 5-chloro-1-pentanol, more preferably 3-methoxy-1-butanol, 3-methoxy-3-methyl-1-butanol, propylene glycol $n$-butyl ether, and 5-chloro-1-pentanol.

Esters having 5-14 carbon atoms, part of whose hydrogen atoms may be substituted by halogen atoms, are preferably diethyl carbonate, diethyl maleate, $n$-propyl acetate, $n$-butyl acetate, isopentyl acetate, 3-methoxybutyl acetate, 3-methoxy-3-methylbutyl acetate, ethyl $n$-butyrate, ethyl $n$-valerate, and 2-chloroethyl acetate, more preferably isopentyl acetate, 3-methoxybutyl acetate, 3-methoxy-3-methylbutyl acetate, ethyl $n$-butyrate and 2-chloroethyl acetate.

Ethers having 4-14 carbon atoms, part of whose hydrogen atoms may be substituted by halogen atoms, are preferably dipropylene glycol dimethyl ether, $n$-butyl ether, diisobutyl ether, and bischloroethyl ether, more preferably dipropylene glycol dimethyl ether and bischloroethyl ether.

Ketones having 5-10 carbon atoms are preferably 2-pentanone, 3-pentanone, 2-hexanone, 3-hexanone, cyclopentanone and cyclohexanone, more preferably 2-pentanone and 3-pentanone.

The washing solvent B may be properly selected depending on the type of the membrane-forming solvent. The washing solvent B may be used alone or in combination. Added to the washing solvent B as an optional component C may be at least one solvent selected from the group consisting of linear hydrofluorocarbons represented by the composition formula of $C_5H_2F_{10}$, for instance, hydrofluoroethers represented by the composition formula of $C_4F_9OCH_3$ or $C_4F_9OC_2H_5$, for instance, cyclic hydrofluorocarbons represented by the composition formula of $C_5H_3F_7$, for instance, perfluorocarbons represented by the composition formula of $C_6F_{14}$ or $C_7F_{16}$, for instance, and perfluoroethers represented by the composition formula of $C_4F_9OCF_3$ or $C_4F_9OC_2F_5$, for instance. The addition of the above optional component C to the washing solvent B can reduce influence on the environment and the likelihood of explosion by ignition. The amount of the optional component C added is preferably 2-98 parts by mass, more preferably 5-50 parts by mass, per 100 parts by mass of the entire mixed solvent. Particularly when the washing solvent B and the optional component C are mixed at such a ratio as to have a surface tension of 24 mN/m or less at any temperatures of 80°C or lower, the shrinkage of the membrane can be suppressed even when a relatively large amount of the washing solvent B is evaporated from the membrane during washing.

Preferred combinations of the washing solvent B used in the first step and the washing solvent A used in the second step in the washing stage are, for instance, as follows: Washing solvent B/Washing solvent A = methylene chloride/$C_4F_9OCH_3$, methylene chloride/$C_4F_9OC_2H_5$, methylene chloride/$C_6F_{14}$, methylene chloride/$C_7F_{16}$, methylene chloride/$n$-heptane, methylene chloride/$n$-hexane, ethers/hydrofluoroethers, $n$-paraffins/hydrofluoroethers, isoparaffins/hydrofluoroethers, cycloparaffins/hydrofluoroethers, and ketones/hydrofluoroethers. Preferable among the above combinations of the washing solvent B and the washing solvent A are methylene chloride/$C_4F_9OCH_3$, methylene chlo-

ride/$C_4F_9OC_2H_5$, methylene chloride/$C_6F_{14}$, methylene chloride/$C_7F_{16}$, methylene chloride/*n*-heptane, methylene chloride/*n*-hexane, *n*-heptane/$C_4F_9OCF_3$, and *n*-heptane/$C_6F_{14}$. It should be noted, however, that the washing is not necessarily restricted to two steps.

Washing with the washing solvent A alone or with a combination of the washing solvent A and the washing solvent B may be conducted by three or more steps, if necessary. Though the number of such washing steps is not particularly restricted, it is usually 3-7, preferably 3-4.

The washing of the gel-like molding can be conducted by a method of showering the washing solvent onto the gel-like molding, a method of immersing the gel-like molding in the washing solvent, or their combined methods, etc. These washing treatments are preferably conducted while conveying the gel-like molding continuously or intermittently. A means of conveying the gel-like molding is usually a roll. When the gel-like molding is immersed in the washing solvent while being conveyed continuously, the gel-like molding is caused to pass through the washing solvent bath. When the gel-like molding is immersed in the washing solvent while being conveyed intermittently, a portion to be washed of the once stopped gel-like molding is preferably immersed and vibrated in a solvent bath at about 100 rpm. The gel-like molding is preferably vibrated while fixing a periphery of its portion to be washed to a frame plate, etc.

The amounts of the washing solvent A and the washing solvent B used are preferably 300-30,000 parts by mass each, per 100 parts by mass of the gel-like molding. When the gel-like molding is treated with the washing solvent A and the washing solvent B by two or more steps, the amount of the washing solvent A is preferably 50-200 parts by mass per 100 parts by mass of the washing solvent B. Washing is conducted preferably until the amount of the membrane-forming solvent remaining in the gel-like molding becomes less than 1 % by mass of that added.

The temperature of the washing solvent A used depends on its surface tension. Specifically, the washing solvent A is used preferably at a temperature, at which its surface tension is 24 mN/m or less, or higher. Because the surface tension of the washing solvent A is 24 mN/m or less at highest at a temperature of 25°C, it may generally be used at room temperature. The washing solvent A may be heated, if necessary.

Though depending on its boiling point, the temperature of the washing solvent B used is generally in a range of 20-80°C. When the washing solvent B has a boiling point of 150°C or lower, washing can be conducted at room temperature. The washing solvent B may be heated, if necessary. When the washing solvent B has a boiling point of higher than 150°C, the washing solvent B is preferably heated because it does not easily penetrate into the membrane at room temperature.

(4) Step of removing washing solvent

The washing solvent A remaining in the molding after washing (called "washed molding" unless otherwise mentioned) is removed with warm water. With warm water used as a medium for removing the washing solvent A, the washing solvent A quickly oozes out of the washed molding and/or evaporated. Accordingly, the washing solvent A can be removed much faster than when warm wind is used, resulting in increased production efficiency. Because the washing solvent A extracted from the washed molding is diffused mainly in warm water, the evaporation of the washing solvent A can be suppressed by exchanging the stained warm water to a fresh one at a proper frequency.

The lower limit temperature of warm water is preferably equal to or higher than the boiling point of the washing solvent A to be removed - 5°C, more preferably equal to or higher than the boiling point, particularly equal to or higher than the boiling point + 3°C. When the lower limit temperature of warm water is equal to or higher than the boiling point of the washing solvent A to be removed - 5°C, the washing solvent A can be removed quickly. The upper limit temperature of warm water is preferably equal to or lower than the crystal dispersion temperature of the thermoplastic resin, more preferably equal to or lower than the crystal dispersion temperature - 5°C. When the upper limit temperature of warm water is higher than the crystal dispersion temperature, the resin may be softened. As described above, polyethylene, for instance, generally has a crystal dispersion temperature of 90°C. Even when the crystal dispersion temperature of the thermoplastic resin is 95°C or higher, the temperature of warm water is preferably 95°C or lower, more preferably 85°C or lower, to suppress steam from generating from the warm water.

The contact time of the washed molding with warm water is preferably 15 seconds or less. Because the washing solvent A has a boiling point of 100°C or lower, the contact time of 15 seconds or less is usually sufficient.

The removal of the washing solvent A from the washed molding can be conducted by a method of showering warm water onto the washed molding, a method of immersing the washed molding in warm water, or their combined methods, etc. These removing treatments are conducted preferably while conveying the washed molding continuously or intermittently. The amount of warm water when it is showered onto the washed molding is preferably 50-5000 ml/$m^2$, more preferably 100-2000 ml/$m^2$. When the amount of warm water showered is less than 50 ml/$m^2$, warm water cannot be uniformly showered onto the washed molding. On the other hand, when it is more than 5000 ml/$m^2$, it is difficult to control the circulation of warm water. When the washed molding is immersed in warm water, it is preferable to spray warm water to the washed molding in a warm water bath, thereby accelerating the extraction of the washing solvent A, and making it easy for the extracted washing solvent A to be diffused in warm water. A means for spraying warm water may be, for instance, a nozzle.

When the washed molding is treated with warm water while conveying continuously, a roll is preferably used, so that a portion of the washed molding engaging the roll is showered, or that at least a portion of the washed molding engaging the roll is immersed in warm water. In such treatment method, because the roll heated by warm water can quickly heat the washed molding, the washing solvent A is removed faster. The roll may be heated from inside, if necessary. The heating temperature of the roll is preferably equal to or lower than the crystal dispersion temperature of the thermoplastic resin, more preferably equal to or lower than the crystal dispersion temperature - 5°C.

The diameter of the roll is preferably 3-100 cm, more preferably 5-30 cm. When the diameter is less than 3 cm, there is only a small contact area between the washed molding and the roll, failing to transmit the heat of the roll to the washed molding sufficiently. On the other hand, when it is more than 100 cm, too large a facility is needed. When the washing solvent A is removed while conveying the washed molding continuously, the conveying speed of the washed molding is preferably 0.5-80 m/min, more preferably 1-50 m/min, from the aspect of production efficiency. One roll is usually enough, though pluralities of rolls may be used, if necessary.

When the washed molding is immersed in warm water while conveying intermittently, it is preferable to vibrate a portion of the washed molding, from which the solvent is removed, in warm water. With a portion of the washed molding, from which the solvent is removed, fixed to a frame plate, etc., the washed molding is preferably vibrated at about 100 rpm, for instance.

The amount of the washing solvent remaining in the microporous thermoplastic resin membrane is reduced with warm water preferably to 5% by mass or less, more preferably 3% by mass or less, per 100% by mass of the dried membrane. When removal is so insufficient that a large amount of the washing solvent remains in the membrane, the porosity of the membrane is lowered by a subsequent heat treatment, resulting in deteriorated permeability.

(5) Drying step

The membrane having the washing solvent removed is dried by a wind-drying method, a heat-drying method, etc. Because water has low affinity for the microporous membrane, water can be removed easily and quickly by blowing warm wind to the warm-water-treated membrane. The drying temperature is preferably equal to or lower than the crystal dispersion temperature of polyolefin, particularly 5°C or more lower than the crystal dispersion temperature.

(6) Orientation step

Before and/or after the above step (3) of removing the membrane-forming solvent, stretching is conducted, if necessary. The stretching is preferably conducted before the step of removing the membrane-forming solvent. The stretching can be conducted by a usual tentering method, a usual roll method, a usual inflation method, a usual rolling method, or their combined methods at predetermined magnification, after heat the gel-like molding. The stretching may be conducted monoaxially or biaxially, though the biaxial stretching is preferable. The biaxial stretching may be simultaneous or sequential, though the simultaneous biaxial stretching is preferable. The stretching improves the mechanical strength of the membrane.

Though different depending on the thickness of the gel-like molding, the stretching magnification is preferably 2 folds or more, more preferably 3-30 folds in the monoaxial stretching. In the biaxial stretching, the stretching magnification is preferably 3 folds or more in any direction, namely 9 folds or more in area magnification, to increase the pricking strength of the membrane. When the area magnification is less than 9 folds, the stretching is insufficient, failing to obtain a high-elasticity, high-strength, microporous thermoplastic resin membrane. On the other hand, when the area magnification is more than 400 folds, there are restrictions in a stretching apparatus, a stretching operation, etc.

The stretching temperature is preferably equal to or lower than the melting point of the thermoplastic resin + 10°C, more preferably in a range of the crystal dispersion temperature or higher and less than the crystals melting point. When the stretching temperature is more than the melting point + 10°C, the resin is molten, failing to orient molecular chains by stretching. When the stretching temperature is lower than the crystal dispersion temperature, the resin is so insufficiently softened that the membrane is easily broken by stretching, failing to achieve high-magnification stretching. In the present invention, the stretching temperature is usually 100-140°C, preferably 110-120°C. The crystal dispersion temperature is determined by the measurement of the temperature characteristics of kinetic viscoelasticity according to ASTM D 4065.

(7) Cross-linking step

A cross-linking treatment is conducted to the dried microporous membrane preferably by ionizing radiation. Usable ionizing radiation rays are α-rays, β-rays, γ-rays, electron beams, etc. The cross-linking treatment by ionizing radiation can be conducted with electron beams of 0.1-100 Mrad and at an acceleration voltage of 100-300 kV. The cross-linking treatment can improve the meltdown temperature of the membrane.

(8) Heat treatment step

The membrane having the washing solvent removed is preferably heat-treated. Crystals in the microporous membrane are stabilized by a heat treatment, resulting in a uniform lamella layer. The heat treatment may be a thermal stretching treatment, a thermal setting treatment or a thermal shrinking treatment, and properly selected depending on the required properties of the microporous membrane. These heat treatments are conducted at a temperature equal to or lower than the melting point of the polyolefin microporous membrane, preferably at a temperature of 60°C or higher and the melting point - 10°C or lower.

The thermal stretching treatment may be conducted in at least one direction by a tentering method, a roll method or a rolling method, which is usually used, to a stretching magnification of preferably 1.01-2.0 folds, more preferably 1.01-1.5 folds.

The thermal setting treatment may be conducted by a tentering method, a roll method or a rolling method. The thermal shrinking treatment may be conducted by a tentering method, a roll method or a rolling method, or by using a belt conveyor or floating. The thermal shrinking treatment is conducted in at least one direction to a shrinkage range of preferably 50% or less, more preferably 30% or less.

The above thermal stretching treatment, thermal setting treatment and thermal shrinking treatment may be combined. When the thermal shrinking treatment is conducted after the thermal stretching treatment, a low-shrinkage, high-strength, microporous membrane can be preferably obtained.

(9) Hydrophilizing treatment step

The membrane having the washing solvent removed may be subjected to a hydrophilizing treatment (treatment of imparting hydrophilic property). The hydrophilizing treatment may be a monomer-grafting treatment, a surfactant treatment, a corona-discharging treatment, etc. The monomer-grafting treatment is preferably conducted after the ionizing radiation.

The surfactant may be any one of nonionic surfactants, cationic surfactants, anion surfactants and amphoteric surfactants, though the nonionic surfactants are preferable. The microporous membrane gets hydrophilic property by a dipping method or a doctor blade method using the surfactant in the form of a solution in water or a lower alcohol such as methanol, ethanol, isopropyl alcohol, etc.

The hydrophilized microporous membrane is dried. To provide the polyolefin microporous membrane with improved permeability, it is preferable to conduct heat treatment at a temperature equal to or lower than the melting point of the polyolefin microporous membrane while preventing its shrinkage during drying. Such heat treatment method with shrinkage prevented may be, for instance, a method of subjecting the hydrophilized microporous membrane to the above thermal stretching treatment.

(10) Coating step

To provide the microporous membrane obtained by removing the washing solvent with improved meltdown properties when used as battery separators, it is covered with a porous body made of fluororesins such as polyvinylidene fluoride, polytetrafluoroethylene, etc. or polyimides, polyphenylene sulfide, etc. Also, the microporous membrane obtained by removing the washing solvent may be provided with improved high-temperature properties when used as battery separators, by forming a thin polypropylene membrane having a racemi-diad fraction of 0.12-0.88 on a surface of the microporous membrane. The racemi-diad is a structure unit having two monomer units, which are connected in an enantiomeric relation to each other.

(B) Second production method

The second production method is the same as the first production method, except that (i) there is no limitation in a washing solvent used in a step of removing the membrane-forming solvent, and that (ii) in a washing-solvent-removing step, a poor solvent to the washing solvent is caused to pass through the washed molding by a suction means to remove the washing solvent, in a state that the washed molding is in contact with the poor solvent. Accordingly, only the step of removing the membrane-forming solvent and the step of removing the washing solvent will be explained below.

(1) Step of removing membrane-forming solvent

The washing solvent usable in the second production method is not restrictive, unless it is compatible with the thermoplastic resin. For instance, the above washing solvents A and B can be used. The washing method using the washing solvents A and B may be the same as above.

(2) Step of removing washing solvent

In a state that the washed molding is in contact with a poor solvent to the washing solvent, the poor solvent is caused to pass through the washed molding by a suction means to remove the washing solvent. While sucking the washing solvent together with the poor solvent, the contact time $t$ (seconds) of the washed molding with the suction means should meet the following general formula (1):

$$t \le (100\text{-}T)^3 / (1,100 \times P^{0.5} \times \log L) \dots (1),$$

wherein T is the temperature (°C) of the poor solvent, P is a suction pressure (kPa), and L is the size of penetrating apertures of the suction means [diameter ($\mu$m) of the largest circle inscribed in the penetrating apertures]. When the contact time $t$ exceeds the above range, the sucking force of the suction means may deform the membrane and provide the membrane surface with suction spots, resulting in poor membrane appearance. In some cases, the membrane may be deteriorated in properties such as air permeability, porosity, etc. To remove the washing solvent sufficiently, the contact time $t$, within a range meeting the above general formula (1), is preferably 0.05 seconds or longer, more preferably 0.2 seconds or longer.

The suction means may be a suction roll, a suction belt, etc., and the suction roll is preferable. Using the suction roll, the gel-like molding can be conveyed while sucking the washing solvent through a peripheral surface of the suction roll. Because tension is applied to the washed molding, the shrinkage of the membrane can be suppressed. When the washed molding is dried by a heating roll without suction, a non-uniform tension tends to be applied to the washed molding because of the evaporation of the washing solvent. Using the suction roll, the washing solvent evaporated by heating can be removed quickly, so that enough tension to the washed molding can be kept even at a high conveying speed.

Though not particularly restricted, the suction roll may comprise, for instance, (i) a cylinder body having an evacuatable hollow space inside, and large numbers of penetrating apertures on a peripheral surface communicating with the hollow space, (ii) a pair of side plates disposed on both sides of the cylinder body, at least one of which has a hole communicating with the hollow space, and (iii) a pair of bearings each having a hole communicating with the hole of the side plate. While rotating the suction roll by a motor, the hollow space is evacuated by suction by a vacuum pump via the bearing hole and a pipe, to suck a liquid or a gas on the peripheral surface. Such suction rolls are disclosed in Japanese Patent 2630870, Japanese Patent 2899226, JP63-247251A, JP63-267648A, JP4-260561A, JP8-133536A, JP8-208100A, JP9-67053A, JP2002-160857A, JP2002-255423A, etc.

Among them, at least one selected from the group consisting of a wire roll having penetrating apertures formed by gaps between wires, a slit roll having slit-like penetrating apertures, and a punched roll having penetrating apertures formed by punching, and the wire roll is more preferable.

The size of penetrating apertures herein means the diameter of the largest circle inscribed in the penetrating apertures of the suction means. When a wire roll, a slit roll or a punched roll, for instance, is used as the suction means, the size of penetrating apertures is the gap between wires, the width of the slit, or the diameter of the maximum circle inscribed in the punched pores.

The size of penetrating apertures is preferably 10-5,000 $\mu$m. When the size of penetrating apertures is less than 10 $\mu$m, not only is the suction speed of the washing solvent low, but also the microporous membrane is likely to be provided with pinholes by metal powder, etc. in a bath for removing the sucked washing solvent. On the other hand, when the size of penetrating apertures is more than 5,000 $\mu$m, suction spots are likely to be formed on the microporous membrane. The size of penetrating apertures is more preferably 20-2,000 $\mu$m, particularly 50-500 $\mu$m.

Though not particularly restricted, the opening ratio of the suction roll is preferably 1-50%. When this opening ratio is less than 1%, a suction force is low. On the other hand, when the opening ratio is more than 50%, the roll has undesirably low strength. Though not particularly restricted, the interval of the penetrating apertures in an axial direction of the roll is preferably 0.5-10 mm.

The diameter of the suction roll is preferably 5-500 cm, more preferably 10-200 cm. When this diameter is less than 5 cm, there is a small contact area between the washed molding and the roll, resulting in insufficient suction of the washing solvent. On the other hand, when this diameter is more than 500 cm, too large a facility is needed.

The suction pressure (difference between the atmospheric pressure and the pressure in the hollow space of the suction means) is preferably 0.5-60 kPa, more preferably 1-40 kPa, particularly 3-20 kPa. When the suction pressure is less than 0.5 kPa, the removal of the washing solvent is poor, and a tension is not easily applied to the washed molding.

On the other hand, when it is more than 60 kPa, suction spots are easily formed.

The contact of the washed molding with the poor solvent can be conducted by a method of showering the poor solvent onto a portion of the washed molding engaging the roll, a method of immersing at least a portion of the washed molding engaging the roll in the poor solvent, or their combined methods, etc. These removing treatments are preferably conducted while continuously conveying the washed molding by the suction roll. The conveying speed by the suction roll is preferably 0.5-80 m/min, more preferably 2-60 m/min, from the aspect of production efficiency. One suction roll is usually enough, though not restrictive.

When the poor solvent is showered onto the washed molding, the amount of the poor solvent is preferably 50-10,000 ml/m$^2$, more preferably 100-5,000 ml/m$^2$. When the amount of the poor solvent showered is less than 50 ml/m$^2$, the poor solvent cannot uniformly be showered onto a surface to be washed. On the other hand, when it is more than 10,000 ml/m$^2$, it is difficult to control the circulation of the poor solvent. When the washed molding is immersed in the poor solvent, the poor solvent may be sprayed onto the washed molding in a poor solvent bath. Thus, the extraction of the washing solvent is accelerated, and the extracted washing solvent is sucked and diffused in the poor solvent, resulting in improved removal efficiency.

As long as the poor solvent has poor compatibility with the washing solvent, it is not particularly restricted. For instance, when methylene chloride or hydrofluoroether is used as the washing solvent, water is preferable as the poor solvent. When pentane is used as the washing solvent, water, N,N-dimethylformamide (DMF), ethylene glycol, etc. are preferable as the poor solvent.

The poor solvent is preferably heated to accelerate the evaporation of the washing solvent, thus accelerating the removal of the washing solvent. However, from the aspect of preventing the softening of the thermoplastic resin, the upper limit temperature of the poor solvent is preferably equal to or lower than the crystal dispersion temperature of the thermoplastic resin, more preferably equal to or lower than the crystal dispersion temperature - 5°C. Within a range equal to or lower than the crystal dispersion temperature of the thermoplastic resin, the temperature of the poor solvent is preferably the boiling point of the washing solvent to be removed - 10°C to the boiling point + 50°C, more preferably the boiling point of the washing solvent to the boiling point + 50°C, further preferably the boiling point of the washing solvent + 3°C to the boiling point + 50°C. When the temperature of the poor solvent is lower than the boiling point of the washing solvent - 10°C, the solvent-removing speed is low. On the other hand, when the temperature of the poor solvent is higher than the boiling point of the washing solvent + 50°C, the evaporation of the washing solvent is likely to occur vigorously, resulting in deteriorated membrane appearance.

When water is used as the poor solvent, its temperature is preferably 30-95°C, more preferably 35-90°C, further preferably 40-85°C. When the temperature of water is lower than 30°C, the solvent-removing speed is low. When it is higher than 95°C, steam is generated too much, resulting in deteriorated operation efficiency.

With a heated poor solvent showered onto a portion of the washed molding engaging the roll, or at least part of the suction roll immersed in a heated poor solvent, the suction roll is heated by the poor solvent. If necessary, the suction roll may be heated by a hot-wind heater, etc. The heating temperature of the suction roll is equal to or lower than the crystal dispersion temperature of the thermoplastic resin, preferably equal to or lower than the crystal dispersion temperature - 5°C. Within a range equal to or lower than the crystal dispersion temperature of the thermoplastic resin, the heating temperature of the suction roll is more preferably the boiling point of the washing solvent to be removed - 10°C to the boiling point + 50°C, further preferably the boiling point of the washing solvent to the boiling point + 50°C, particularly the boiling point of the washing solvent + 3°C to the boiling point + 50°C.

[3] Microporous thermoplastic resin membrane

The microporous membrane produced by the above methods usually has a porosity of 25-80%, and a thermal shrinkage ratio of 15% or less in both machine direction (MD) and transverse direction (TD). Particularly the membrane produced by the first method has air permeability of 10-2,000 seconds/100 cc (converted to that of a 30 μm-thick membrane), free from water spots on the surface. The membrane produced by the second method has air permeability of 10-2,000 seconds/100 cc (converted to that of a 20 μm-thick membrane), free from suction spots on the surface and deformation.

Though properly selected depending on applications, the thickness of the microporous thermoplastic resin membrane is preferably 5-200 μm when used for battery separators, for instance. Because the microporous thermoplastic resin membranes obtained by the production method of the present invention have excellent permeability, they are suitable for battery separators, filters, etc.

The present invention will be explained in more detail with reference to Examples below without intention of restricting the scope of the present invention.

Example 1

A polyethylene composition was produced by mixing polyethylene having a Mw/Mn of 16, a melting point of 135°C and a crystal dispersion temperature of 90°C, which comprised 25% by mass of ultra-high-molecular-weight polyethylene (UHMWPE) having a mass-average molecular weight of $2.0 \times 10^6$, and 75% by mass of high-density polyethylene (HDPE) having a mass-average molecular weight of $3.5 \times 10^5$, with tetrakis[methylene-3-(3,5-ditertiary-butyl-4-hydroxyphenyl)-propionate] methane as an antioxidant in an amount of 0.375 parts by mass per 100 parts by mass of the polyethylene composition. 25 parts by mass of the resultant polyethylene composition was supplied to a strong-kneading, double-screw extruder (internal diameter = 58 mm, L/D = 42), and 75 parts by mass of liquid paraffin was introduced into the double-screw extruder through the side-feeder. The resultant mixture was melt-blended at 200°C and 200 rpm in the extruder to prepare a polyethylene solution. Subsequently, this polyethylene solution was extruded through a T-die installed at a tip end of the extruder such that a biaxially stretched membrane became as thick as about 40 $\mu$m, and drawn by a cooling roll controlled at 50°C, to form a gel-like sheet.

The resultant gel-like sheet was biaxially stretched to 5 x 5 times by a continuously orientating machine at 116°C to form a stretched membrane. Set in a frame plate of 20 cm x 20 cm made of aluminum (the same frame plate used below), the resultant membrane was immersed in a washing bath of n-pentane [surface tension: 15.5 mN/m at 25°C, boiling point: 36°C, solubility in water: 225 ppm (on a mass basis) at 16°C] controlled to 23°C, and washed with vibration at 100 rpm for 30 seconds. The above series of washing operations were further repeated 3 times, with n-pentane exchanged to fresh one in each washing operation. The washed translucent membrane, which remained fixed to the frame plate, was immersed in a warm water bath controlled to 50°C, and treated with the warm water while vibrating until the membrane became white with n-pentane extracted. It took 5 seconds to remove the washing solvent. Water attached to the resultant membrane was then blown off by air spray, and thermally set at 122°C for 60 seconds to produce a microporous polyethylene membrane.

Example 2

A biaxially stretched membrane produced in the same manner as in Example 1 was fixed to a frame plate, immersed in a first washing bath of methylene chloride [surface tension: 27.3 mN/m at 25°C, boiling point: 40.0°C, solubility in water: 20,000 ppm (on a mass basis) at 20°C] controlled to 23°C, and washed while vibrating at 100 rpm for 30 seconds. With methylene chloride exchanged to fresh one in each washing operation, the above series of washing operations was further twice repeated. The membrane, which remained fixed to the frame plate, was then immersed in a second washing bath (rinsing bath) of methyl perfluorobutyl ether [composition formula: $C_4F_9OCH_3$, Novec HFE-7100, available from Sumitomo 3M, surface tension: 13.6 mN/m at 25°C, boiling point: 61°C, solubility in water: 12 ppm (on a mass basis) at 25°C, flashpoint: non] controlled to 23°C to carry out a rinsing treatment while vibrating at 100 rpm for 20 seconds. With methylene chloride exchanged to fresh one, the above series of rinsing operations were repeated once. The washed translucent membrane, which remained fixed to the frame plate, was immersed in a warm water bath controlled to 70°C, and treated with the warm water while vibrating until the membrane became white with methyl perfluorobutyl ether extracted. It took 10 seconds to remove the washing solvent. Water attached to the membrane was then blown off by air spray, and thermally set at 122°C for 60 seconds to produce a microporous polyethylene membrane.

Example 3

A microporous polyethylene membrane was produced in the same manner as in Example 2, except that it was washed with n-decane [surface tension: 23.4 mN/m at 25°C, boiling point: 173°C, solubility in water: 50 ppm (on a mass basis) at 20°C] controlled to 60°C in the first washing bath 3 times in total, and that the temperature of the warm water was set at 80°C. It took 2 seconds to remove the washing solvent.

Example 4

A biaxially stretched membrane having a length of 600 m and a width of 0.4 m was produced in the same manner as in Example 1. The resultant stretched membrane was washed by passing through a continuous washing apparatus at a speed of 2 m/minute. The continuous washing apparatus had three first washing baths containing methylene chloride controlled to 23 °C, and two second washing baths (rinsing baths) containing methyl perfluorobutyl ether controlled to 23°C. A residence time was 30 seconds in each of the three first washing baths and 20 seconds in each of the two second washing baths. The washed membrane passed through a warm water bath controlled to 70°C to remove the washing solvent. With a roll having a diameter of 10 cm disposed in the warm water bath such that a warm water surface was 2 cm below a roll axis, the membrane was substantially in contact with a lower circular half of the roll, and the membrane was brought into contact with the warm water in such a manner that it was in contact with the roll as much as possible. The warm water was controlled to 70°C and continuously renewed to avoid it from being excessively contaminated by the washing solvent. The residence time of the membrane in the warm water bath, a time period in which the membrane was in contact with the warm water, was 4 seconds. After removing the washing solvent, water attached to the membrane was blown off by air spray, and further thermally set at 122°C for 60 seconds to produce a microporous polyethylene membrane.

Example 5

A biaxially stretched membrane having a length of 600 m and a width of 0.4 m was produced in the same manner as in Example 1. The resultant stretched membrane was washed by passing through a continuous washing apparatus at a speed of 2 m/minute. The continuous washing apparatus had three first washing baths containing methylene chloride controlled to 23 °C, and two second washing baths (rinsing baths) containing perfluorohexane [composition formula: $C_6F_{14}$, Fluorinert HC-72 available from Sumitomo 3M, surface tension: 12.0 mN/m at 25°C, boiling point: 56°C, solubility in water: 100 ppm or less (on a mass basis) at 25°C] controlled to 23°C. The residence time was 30 seconds in each of the three first washing baths and 20 seconds in each of the two second washing baths. The washing solvent was removed from the washed membrane by showering warm water at 75°C. With the membrane substantially in contact with an upper circular half of a roll having a diameter of 10 cm, which was disposed in the bath, warm water was showered at 5 L/minute onto the moving membrane from above the roll through pluralities of nozzles arranged in the axial direction of the roll. The contact time of the membrane with warm water was 4 seconds. Water attached to the membrane was then blown off by air spray, and further thermally set at 122°C for 60 seconds to produce a microporous polyethylene membrane.

Comparative Example 1

A microporous polyethylene membrane was produced in the same manner as in Example 1, except that the treatment of the gel-like molding in the washing bath was conducted with *n*-decane controlled to 60°C 4 times in total, and that the temperature of the warm water was set at 80°C. It took 600-900 seconds to remove the washing solvent.

Comparative Example 2

A microporous polyethylene membrane was produced in the same manner as in Example 1, except that the treatment of the gel-like molding in the washing bath was conducted with methylene chloride controlled to 23°C 4 times in total, and that the temperature of the warm water was set at 70°C. It took 3 seconds to remove the washing solvent.

Comparative Example 3

A microporous polyethylene membrane was produced in the same manner as in Example 1, except that the treatment of the gel-like molding in the washing bath was conducted with diethyl ether [surface tension: 16.4 mN/m at 25°C, boiling point: 35°C, solubility in water: 65,000 ppm (on a mass basis) at 20°C] controlled to 23°C 4 times in total, and that the temperature of the warm water was set at 70°C. It took 2 seconds to remove the washing solvent.

Comparative Example 4

A microporous polyethylene membrane was produced in the same manner as in Example 2 except for removing the washing solvent by blowing warm wind at 70°C. It took 40 seconds to remove the washing solvent.

Comparative Example 5

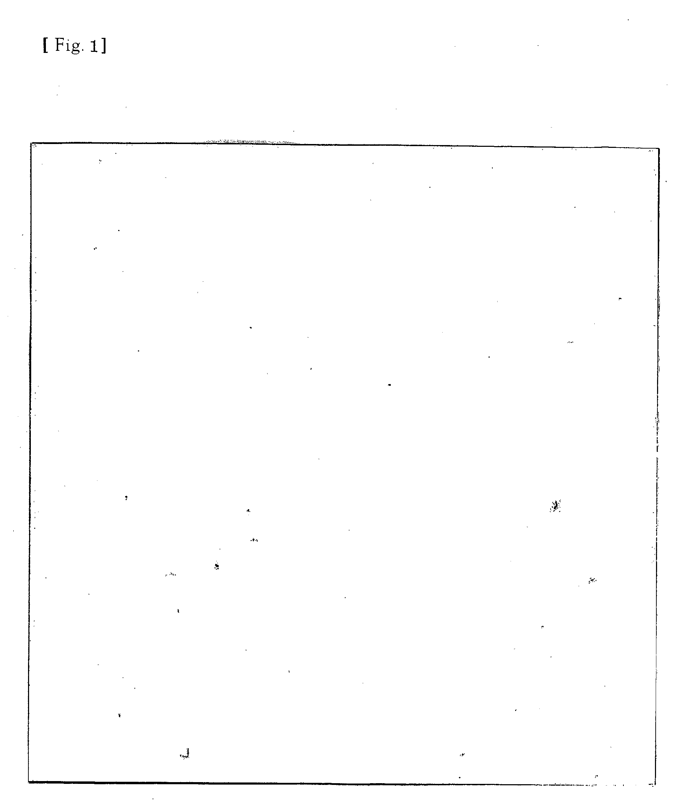

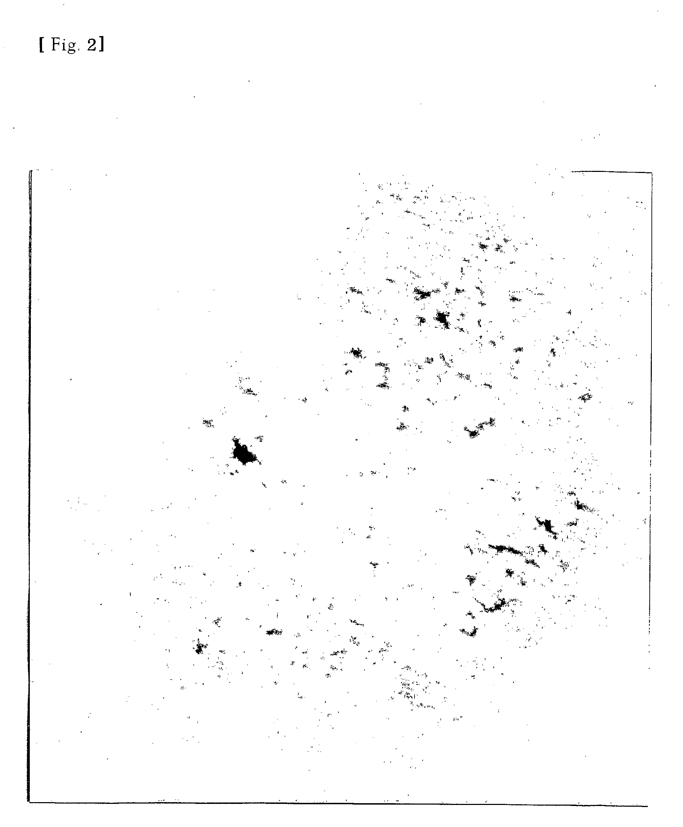

A microporous polyethylene membrane was produced in the same manner as in Example 4 except for changing the washing solvent in the rinsing bath to methylene chloride. It took 8 seconds to remove the washing solvent.
The photographs of the surfaces of the microporous membranes of Example 1 and Comparative Example 2 are shown in Fig. 1 (Example 1) and Fig. 2 (Comparative Example 2). As shown in Figs. 1 and 2, the microporous membrane of Example 1 had a uniform surface free from water spots, while the microporous membrane of Comparative Example 1 had water spots on the surface.
The properties of the microporous thermoplastic resin membrane produced in Examples 1-5 and Comparative Examples 1-5 were measured by the following methods. The results are shown in Table 2.
(1) Appearance: Observed by the naked eye.
Good: No water spot was observed.

Poor: Water spots were observed.

(2) Membrane thickness: Measured by a contact thickness meter available from Mitutoyo Corporation.

(3) Air permeability: Measured according to JIS P8117 (converted to that of a 30 $\mu$m-thick membrane).

(4) Porosity: Measured by a mass method.

(5) Thermal shrinkage ratio: Shrinkage ratios were measured 3 times in MD and TD, respectively, when the microporous membrane was exposed to 105°C for 8 hours, and their average was calculated.

## Table 2

| No. | Example 1 | Example 2 | Example 3 | Example 4 |
|---|---|---|---|---|
| PE Composition[1] | | | | |
| UHMWPE (wt. %)[2] | 25 | 25 | 25 | 25 |
| HDPE (wt. %)[3] | 75 | 75 | 75 | 75 |
| PE Concentration[4] | 25 | 25 | 25 | 25 |
| Membrane-Forming Conditions | | | | |
| Stretching[5] | 5 x 5 | 5 x 5 | 5 x 5 | 5 x 5 |
| Stretching Temp. (°C) | 116 | 116 | 116 | 116 |
| Washing Treatment | | | | |
| Washing Solvent<br>Boiling Point[6]<br>Surface Tension[7]<br>Solubility in Water[8] | $n$-$C_5H_{12}$<br>36<br>15.5<br>225 (16°C) | $CH_2Cl_2$<br>40<br>27.3<br>20,000 (20°C) | $n$-$C_{10}H_{22}$<br>173<br>23.4<br>50 (20°C) | $CH_2Cl_2$<br>40<br>27.3<br>20,000 (20°C) |
| Method[9] | A | A | A | B |
| Temperature (°C) | 23 | 23 | 60 | 23 |
| Time (seconds) | 30 | 30 | 30 | 30 |
| Number of steps | 4[10] | 3[10] | 3[10] | 3[11] |
| Rinsing Treatment | | | | |
| Washing Solvent<br>Boiling Point[6]<br>Surface Tension[7]<br>Solubility in Water[8] | - | $C_4F_9OCH_3$[12]<br>61<br>13.6<br>12 (25°C) | $C_4F_9OCH_3$[12]<br>61<br>13.6<br>12 (25°C) | $C_4F_9OCH_3$[12]<br>61<br>13.6<br>12 (25°C) |
| Method[9] | - | A | A | B |
| Temperature (°C) | - | 23 | 23 | 23 |
| Time (seconds) | - | 20 | 20 | 20 |
| Number of Steps | - | 2[10] | 2[10] | 2[11] |
| Washing Solvent-Removing Treatment | | | | |
| Removing Medium | Warm Water | Warm Water | Warm Water | Warm Water |
| Method | Immersion | Immersion | Immersion | Immersion |
| Temperature (°C) | 50 | 70 | 80 | 70 |
| Time (seconds) | 5 | 10 | 2 | 4 |
| Thermal Setting Treatment | | | | |
| Temperature (°C) | 122 | 122 | 122 | 122 |
| Time (seconds) | 60 | 60 | 60 | 60 |
| Properties of Microporous Membrane | | | | |
| Appearance | Good | Good | Good | Good |
| Thickness (µm) | 34.2 | 34.6 | 34.2 | 31.0 |
| Porosity (%) | 54.3 | 54.7 | 54.8 | 51.5 |
| Air Permeability[13] | 258 | 263 | 259 | 320 |
| Thermal Shrinkage Ratio[14]<br>MD (%)<br>TD (%) | 14.2<br>12.9 | 14.8<br>13.5 | 13.9<br>12.6 | 13.6<br>12.5 |

## Table 2 (continued)

| No. | Example 5 | Comp. Ex. 1 | Comp. Ex. 2 | Comp. Ex. 3 |
|---|---|---|---|---|
| PE Composition[1] | | | | |
| UHMWPE (wt. %)[2] | 25 | 25 | 25 | 25 |
| HDPE (wt. %)[3] | 75 | 75 | 75 | 75 |
| PE Concentration[4] | 25 | 25 | 25 | 25 |
| Membrane-Forming Conditions | | | | |
| Stretching[5] | 5 x 5 | 5 x 5 | 5 x 5 | 5 x 5 |
| Stretching Temp. (°C) | 116 | 116 | 116 | 116 |
| Washing Treatment | | | | |
| Washing Solvent<br>Boiling Point[6]<br>Surface Tension[7]<br>Solubility in Water[8] | $CH_2Cl_2$<br>40<br>27.3<br>20,000 (20°C) | $n$-$C_{10}H_{22}$<br>173<br>23.4<br>50 (20°C) | $CH_2Cl_2$<br>40<br>27.3<br>20,000 (20°C) | $C_2H_5OC_2H_5$<br>35<br>16.4<br>65,000 (20°C) |
| Method[9] | B | A | A | A |
| Temperature (°C) | 23 | 60 | 23 | 23 |
| Time (seconds) | 30 | 30 | 30 | 30 |
| Number of steps | 3[10] | 4[10] | 4[10] | 4[10] |
| Rinsing Treatment | | | | |
| Washing Solvent<br>Boiling Point[6]<br>Surface Tension[7]<br>Solubility in Water[8] | $C_6F_{14}$[15]<br>56<br>12<br>$\leq 100$ (25°C) | -<br><br><br> | -<br><br><br> | -<br><br><br> |
| Method[9] | B | - | - | - |
| Temperature (°C) | 23 | - | - | - |
| Time (seconds) | 20 | - | - | - |
| Number of Steps | 2[11] | - | - | - |
| Washing Solvent-Removing Treatment | | | | |
| Removing Medium | Warm Water | Warm Water | Warm Water | Warm Water |
| Method | Showering | Immersion | Immersion | Immersion |
| Temperature (°C) | 75 | 80 | 70 | 70 |
| Time (seconds) | 4 | 600-900 | 3 | 2 |
| Thermal Setting Treatment | | | | |
| Temperature (°C) | 122 | 122 | 122 | 122 |
| Time (seconds) | 60 | 60 | 60 | 60 |
| Properties of Microporous Membrane | | | | |
| Appearance | Good | Good | Poor | Poor |
| Thickness (μm) | 31.1 | 23.9 | 30.6 | 28.5 |
| Porosity (%) | 51.8 | 37.1 | 49.3 | 47.2 |
| Air Permeability[13] | 325 | 912 | 379 | 427 |
| Thermal Shrinkage Ratio[14]<br>MD (%)<br>TD (%) | <br>13.6<br>12.7 | <br>10.2<br>9.9 | <br>12.1<br>11.1 | <br>11.6<br>10.5 |

## Table 2 (continued)

| No. | Comp. Ex. 4 | Comp. Ex. 5 |
|---|---|---|
| PE Composition[1] | | |
| UHMWPE (wt. %)[2] | 25 | 25 |
| HDPE (wt. %)[3] | 75 | 75 |
| PE Concentration[4] | 25 | 25 |
| Membrane-Forming Conditions | | |
| Stretching[5] | 5 x 5 | 5 x 5 |
| Stretching Temp. (°C) | 116 | 116 |
| Washing Treatment | | |
| Washing Solvent<br>Boiling Point[6]<br>Surface Tension[7]<br>Solubility in Water[8] | $CH_2Cl_2$<br>40<br>27.3<br>20,000 (20°C) | $CH_2Cl_2$<br>40<br>27.3<br>20,000 (20°C) |
| Method[9] | A | B |
| Temperature (°C) | 23 | 23 |
| Time (seconds) | 30 | 30 |
| Number of steps | 3[10] | 3[10] |
| Rinsing Treatment | | |
| Washing Solvent<br>Boiling Point[6]<br>Surface Tension[7]<br>Solubility in Water[8] | $C_4F_9OCH_3$[12]<br>61<br>13.6<br>12 (25°C) | $CH_2Cl_2$<br>40<br>27.3<br>20,000 (20°C) |
| Method[9] | A | B |
| Temperature (°C) | 23 | 23 |
| Time (seconds) | 20 | 20 |
| Number of Steps | 2[10] | 2[11] |
| Washing Solvent-Removing Treatment | | |
| Removing Medium | Warm Wind | Warm Water |
| Method | Blowing | Immersion |
| Temperature (°C) | 70 | 70 |
| Time (seconds) | 40 | 8 |
| Thermal Setting Treatment | | |
| Temperature (°C) | 122 | 122 |
| Time (seconds) | 60 | 60 |
| Properties of Microporous Membrane | | |
| Appearance | Poor | Poor |
| Thickness (μm) | 34.3 | 21.9 |
| Porosity (%) | 55.1 | 31.5 |
| Air Permeability[13] | 252 | 2,100 |
| Thermal Shrinkage Ratio[14]<br>MD (%)<br>TD (%) | <br>12.9<br>11.6 | <br>13.1<br>12.4 |

[0191]    Note:

(1)    Mw/Mn = 16.

(2) Ultra-high-molecular-weight polyethylene, Mw = $2.0 \times 10^6$.

(3) High-density polyethylene, Mw = $3.5 \times 10^5$.

(4) The Concentration (wt. %) of polyethylene in the melt blend.

(5) Magnification (folds) of simultaneous biaxial stretching in MD and TD.

(6) Boiling point (°C) at the atmospheric pressure.

(7) Surface tension (mN/m) at 25°C.

(8) Solubility (ppm by weight) in water.

(9) A: Vibration while the frame was fixed.

B: Conveying by the roll.

(10) The number of washing steps.

(11) The number of washing baths.

(12) Methyl perfluorobutyl ether.

(13) Air permeability (sec/100 cc) converted to that of a 30 μm-thick membrane.

(14) Thermal shrinkage ratio (%) in MD and TD.

(15) Perfluorohexane.

As shown in Table 2, the microporous thermoplastic resin membranes of Examples 1-5 produced by the first method of the present invention had excellent appearance, porosity, air permeability and thermal shrinkage resistance. On the other hand, because the rinsing treatment was conducted with a washing solvent having a boiling point of higher than 100°C in Comparative Example 1, a long period of time was needed to remove the washing solvent, and the resultant microporous thermoplastic resin membrane had poor porosity and air permeability. The microporous thermoplastic resin membranes of Comparative Examples 2 and 5 had poor appearance, porosity and air permeability, because they were subjected to a washing treatment and/or a rinsing treatment with the washing solvent having a surface tension of more than 24 mN/m at 25°C and a solubility of more than 600 ppm (on a mass basis) in water at 16°C. The microporous thermoplastic resin membrane of Comparative Example 3 had poor appearance, porosity and air permeability, because it was subjected to a washing treatment with the washing solvent having a solubility of more than 600 ppm (on a mass basis) in water at 16°C. In Comparative Example 4, a long period of time was needed to remove the washing solvent, because the washing solvent was removed with a warm wind.

Example 6

A polyethylene composition was produced by mixing polyethylene having Mw/Mn of 16.8, a melting point of 135°C and a crystal dispersion temperature of 90°C, which comprised 20% by mass of ultra-high-molecular-weight polyethylene (UHMWPE) having a mass-average molecular weight of $2.0 \times 10^6$, and 80% by mass of high-density polyethylene (HDPE) having a mass-average molecular weight of $3.5 \times 10^5$, with tetrakis[methylene-3-(3,5-ditertiary-butyl-4-hydroxyphenyl)-propionate] methane as an antioxidant in an amount of 0.375 parts by mass per 100 parts by mass of the composition. 30 parts by mass of the resultant polyethylene composition was charged into a strong-blending double-screw extruder (inner diameter 58 mm, L/D = 42), and 70 parts by mass of liquid paraffin was supplied to this double-screw extruder through a side feeder, to carry out melt-blending under the conditions of 210°C and 200 rpm to prepare a polyethylene solution in the extruder. This polyethylene solution was then extruded through a T-die installed at a tip end of the extruder such that a biaxially stretched membrane became as thick as about 45 $\mu$m, and drawn by a cooling roll controlled at 40°C, to form a gel-like sheet. The resultant gel-like molding was biaxially stretched to 5 x 5 times by a continuously orientating machine at 119°C. The biaxially stretched membrane was then taken up around a paper pipe with its end portions cut to have a width of 40 cm, thereby obtaining a stretched membrane having a length of 600 m.

The stretched membrane was conveyed through a continuous washing apparatus at a speed of 16 m/minute for washing. The continuous washing apparatus had three first washing baths containing methylene chloride [surface tension: 27.3 mN/m at 25°C, boiling point: 40.0°C, solubility in water: 20,000 ppm (on a mass basis) at 20°C] controlled to 26°C, and two second washing baths (rinsing baths) containing methyl perfluorobutyl ether [composition formula: $C_4F_9OCH_3$, Novec HFE-7100 available from Sumitomo 3M, surface tension: 13.6 mN/m at 25°C, boiling point: 61°C, solubility in water: 12 ppm (on a mass basis) at 25°C, flashpoint: non] controlled to 26°C. The liquid surface height in each washing bath was controlled such that the residence time in each of the first and second washing baths was 10 seconds. With each washing bath provided with a liquid-supplying line at a lower position and a line for discharging an overflowing liquid at the liquid surface height, each fresh liquid was continuously supplied at 4 L/min while discharging the old one at the same rate.

The washing solvent was removed from the washed molding by a suction wire roll, while keeping the molding in contact with warm water at 85°C. With a suction wire roll constituted by a wound round wire having a diameter of 0.8 mm [pore size (gaps between wires): 50 $\mu$m, diameter: 10 cm] disposed in a warm water bath such that a warm water surface was 4 cm above the lowest position of the roll, the washed molding was brought into contact with a lower circular half of the roll. The contact time of the washed molding with the suction wire roll was 0.59 seconds, and the suction pressure was 5kPa. The warm water was renewed by continuous supplying and withdrawal to avoid it from being excessively contaminated by the washing solvent. The membrane deprived of the washing solvent was fixed to an aluminum frame of 20 cm x 20 cm, and thermally set at 124°C for 120 seconds to produce a microporous polyethylene membrane.

Example 7

A microporous polyethylene membrane was produced in the same manner as in Example 6, except that the conveying speed of the stretched membrane was set at 8m/minute, that the speed of supplying a fresh liquid to each of the first and second washing baths was set at 2 L/min, that the suction pressure was set at 20 kPa, that the temperature of the warm water was set at 75°C, and that the contact time of the washed molding with the suction wire roll was set to 1.18 seconds.

Example 8

A microporous polyethylene membrane was produced in the same manner as in Example 6, except that the washing solvent for a rinsing treatment was changed to methylene chloride, and that the wire gap in the suction wire roll was set at 100 $\mu$m.

Example 9

A microporous polyethylene membrane was produced in the same manner as in Example 6, except that the washing solvent in the first and second washing baths was changed to n-pentane [surface tension: 15.5 mN/m at 25°C, boiling point: 36°C, solubility in water: 225 ppm (on a mass basis) at 16°C], that the conveying speed of the stretched membrane was set at 12 m/minute, that the speed of supplying a fresh liquid to each of the first and second washing baths was set at 3 L/min, that the wire gap in the suction wire roll was set to 200 $\mu$m, that the suction pressure was set at 10 kPa, that the warm water temperature was set at 80°C, and that the contact time of the washed molding with the suction wire roll was set to 0.79 seconds.

Example 10

A microporous polyethylene membrane was produced in the same manner as in Example 9 except for using N,N-dimethylformamide controlled to 80°C as the poor solvent in place of warm water.

Example 11

A microporous polyethylene membrane was produced in the same manner as in Example 6, except that the solvent in the first washing bath was changed to *n*-decane [surface tension: 23.4 mN/m at 25°C, boiling point: 173°C, solubility in water: 50 ppm (on a mass basis) at 20°C] controlled to 55°C, that the washing solvent in the rinsing bath was changed to -perfluorohexane [composition formula: $C_6F_{14}$, Fluorinert HC-72 available from Sumitomo 3M, surface tension: 12.0 mN/m at 25°C, boiling point: 56°C, solubility in water: 100 ppm (on a mass basis) or less at 25°C], that the wire gap in the suction wire roll was set to 200 $\mu$m, that the suction pressure was set at 20 kPa, and that the warm water temperature was set at 70°C.

Comparative Example 6

A microporous polyethylene membrane was produced in the same manner as in Example 6, except that the conveying speed of the stretched membrane was set at 8m/minute, that the speed of supplying a fresh liquid to each of the first and second washing baths was set at 2 L/min, and that the contact time of the washed molding with the suction wire roll was set to 1.18 seconds.

Comparative Example 7

A microporous polyethylene membrane was produced in the same manner as in Example 6 except for changing the suction pressure to 20 kPa.

Comparative Example 8

A microporous polyethylene membrane was produced in the same manner as in Example 8, except that the conveying speed of the stretched membrane was set at 8m/minute, that the speed of supplying a fresh liquid to each of the first and second washing baths was set at 2 L/min, and that the contact time of the washed molding with the suction wire roll was changed to 1.18 seconds.

The properties of the microporous thermoplastic resin membranes obtained in Examples 6-11 and Comparative Examples 6-8 were measured by the following methods. The results are shown in Table 3.

(1) Appearance: Observed by the naked eye.

Good: No suction spots were observed.

Poor: Suction spots were observed.

The membrane thickness (2), the porosity (3), the air permeability (4) and the thermal shrinkage ratio (5) were measured by the same methods as in Examples 1-5. The air permeability was converted to that of a 20 $\mu$m-thick membrane.

## Table 3

| No. | Example 6 | Example 7 | Example 8 | Example 9 |
|---|---|---|---|---|
| PE Composition[1] | | | | |
| UHMWPE (wt. %)[2] | 20 | 20 | 20 | 20 |
| HDPE (wt. %)[3] | 80 | 80 | 80 | 80 |
| PE Concentration[4] | 30 | 30 | 30 | 30 |
| Membrane-Forming Conditions | | | | |
| Stretching[5] | 5 x 5 | 5 x 5 | 5 x 5 | 5 x 5 |
| Stretching Temp. (°C) | 119 | 119 | 119 | 119 |
| Conveying Speed (m/min) | 16 | 8 | 16 | 12 |
| Washing Treatment | | | | |
| Washing Solvent Boiling Point[6] Surface Tension[7] Solubility in Water[8] | $CH_2Cl_2$ 40 27.3 20,000 (20°C) | $CH_2Cl_2$ 40 27.3 20,000 (20°C) | $CH_2Cl_2$ 40 27.3 20,000 (20°C) | $n$-$C_5H_{12}$ 36 15.5 225 (16°C) |
| Method[9] | B | B | B | B |
| Temperature (°C) | 26 | 26 | 26 | 26 |
| Time (seconds) | 10 | 10 | 10 | 10 |
| Number of Steps | 3 | 3 | 3 | 3 |
| Fresh Liquid[16] (L/min) | 4 | 2 | 4 | 3 |
| Rinsing Treatment | | | | |
| Washing Solvent Boiling Point[6] Surface Tension[7] Solubility in Water[8] | $C_4F_9OCH_3$[12] 61 13.6 12 (25°C) | $C_4F_9OCH_3$[12] 61 13.6 12 (25°C) | $CH_2Cl_2$ 40 27.3 20,000 (20°C) | $n$-$C_5H_{12}$ 36 15.5 225 (16°C) |
| Method[9] | B | B | B | B |
| Temperature (°C) | 26 | 26 | 26 | 26 |
| Time (seconds) | 10 | 10 | 10 | 10 |
| Number of Steps | 2 | 2 | 2 | 2 |
| Fresh Liquid[16] (L/min) | 4 | 2 | 4 | 3 |
| Washing Solvent-Removing Treatment | | | | |
| Suction Roll Diameter (μm) Size of Apertures (cm) | Wire Roll 10 50 | Wire Roll 10 50 | Wire Roll 10 100 | Wire Roll 10 200 |
| Suction Pressure (kPa) | 5 | 20 | 5 | 10 |
| Poor Solvent | Warm Water | Warm Water | Warm Water | Warm Water |
| Poor Solvent Temp. (°C) | 85 | 75 | 85 | 80 |
| Contact Time (seconds) | 0.59 | 1.18 | 0.59 | 0.79 |
| $(100-T)^3/(1100 \times P^{0.5} \times \log L)$ | 0.81 | 1.87 | 0.69 | 1.00 |
| Thermal Setting Treatment | | | | |
| Temperature (°C) | 124 | 124 | 124 | 124 |
| Time (seconds) | 120 | 120 | 120 | 120 |
| Properties of Microporous Membrane | | | | |
| Appearance | Good | Good | Good | Good |
| Thickness (μm) | 25.9 | 25.9 | 24.8 | 25.5 |
| Porosity (%) | 52.3 | 52.5 | 50.2 | 51.8 |
| Air Permeability[17] | 189 | 185 | 237 | 203 |
| Thermal Shrinkage Ratio[14] MD (%) TD (%) | 12.6 11.6 | 12.7 11.9 | 12.1 11.4 | 12.4 11.6 |

## Table 3 (continued)

| No. | Example 10 | Example 11 | Comp. Ex. 6 | Comp. Ex. 7 |
|---|---|---|---|---|
| PE Composition[1] | | | | |
| UHMWPE (wt. %)[2] | 20 | 20 | 20 | 20 |
| HDPE (wt. %)[3] | 80 | 80 | 80 | 80 |
| PE Concentration[4] | 30 | 30 | 30 | 30 |
| Membrane-Forming Conditions | | | | |
| Stretching[5] | 5 x 5 | 5 x 5 | 5 x 5 | 5 x 5 |
| Stretching Temp. (°C) | 119 | 119 | 119 | 119 |
| Conveying Speed (m/min) | 12 | 16 | 8 | 16 |
| Washing Treatment | | | | |
| Washing Solvent<br>Boiling Point[6]<br>Surface Tension[7]<br>Solubility in Water[8] | $n\text{-}C_5H_{12}$<br>36<br>15.5<br>225 (16°C) | $n\text{-}C_{10}H_{22}$<br>173<br>23.4<br>50 (20°C) | $CH_2Cl_2$<br>40<br>27.3<br>20,000 (20°C) | $CH_2Cl_2$<br>40<br>27.3<br>20,000 (20°C) |
| Method[9] | B | B | B | B |
| Temperature (°C) | 26 | 55 | 26 | 26 |
| Time (seconds) | 10 | 10 | 10 | 10 |
| Number of Steps | 3 | 3 | 3 | 3 |
| Fresh Liquid[16] (L/min) | 3 | 4 | 2 | 4 |
| Rinsing Treatment | | | | |
| Washing Solvent<br>Boiling Point[6]<br>Surface Tension[7]<br>Solubility in Water[8] | $n\text{-}C_5H_{12}$<br>36<br>15.5<br>225 (16°C) | $C_6F_{14}$[15]<br>56<br>12<br>$\leq$ 100 (25°C) | $C_4F_9OCH_3$[12]<br>61<br>13.6<br>12 (25°C) | $C_4F_9OCH_3$[12]<br>61<br>13.6<br>12 (25°C) |
| Method[9] | B | B | B | B |
| Temperature (°C) | 26 | 26 | 26 | 26 |
| Time (seconds) | 10 | 10 | 10 | 10 |
| Number of Steps | 2 | 2 | 2 | 2 |
| Fresh Liquid[16] (L/min) | 3 | 4 | 2 | 4 |
| Washing Solvent-Removing Treatment | | | | |
| Suction Roll<br>Diameter (μm)<br>Size of Apertures (cm) | Wire Roll<br>10<br>200 | Wire Roll<br>10<br>200 | Wire Roll<br>10<br>50 | Wire Roll<br>10<br>50 |
| Suction Pressure (kPa) | 10 | 20 | 5 | 20 |
| Poor Solvent | N,N-Dimethyl-formamide | Warm Water | Warm Water | Warm Water |
| Poor Solvent Temp. (°C) | 80 | 70 | 85 | 85 |
| Contact Time (seconds) | 0.79 | 0.59 | 1.18 | 0.59 |
| $(100\text{-}T)^3/(1100 \times P^{0.5} \times \log L)$ | 1.00 | 2.39 | 0.81 | 0.40 |
| Thermal Setting Treatment | | | | |
| Temperature (°C) | 124 | 124 | 124 | 124 |
| Time (seconds) | 120 | 120 | 120 | 120 |
| Properties of Microporous Membrane | | | | |
| Appearance | Good | Good | Poor | Poor |
| Thickness (μm) | 24.9 | 25.9 | 25.1 | 24.8 |
| Porosity (%) | 49.8 | 52.4 | 50.2 | 50.4 |
| Air Permeability[17] | 243 | 192 | 240 | 231 |
| Thermal Shrinkage Ratio[14]<br>MD (%)<br>TD (%) | <br>11.9<br>10.9 | <br>12.5<br>11.7 | <br>12.2<br>11.2 | <br>12.2<br>11.4 |

## Table 3 (continued)

| No. | Comp. Ex. 8 |
|---|---|
| PE Composition[1] | |
| UHMWPE (wt. %)[2] | 20 |
| HDPE (wt. %)[3] | 80 |
| PE Concentration[4] | 30 |
| Membrane-Forming Conditions | |
| Stretching[5] | 5 x 5 |
| Stretching Temp. (°C) | 119 |
| Conveying Speed (m/min) | 8 |
| Washing Treatment | |
| Washing Solvent<br>Boiling Point[6]<br>Surface Tension[7]<br>Solubility in Water[8] | CH$_2$Cl$_2$<br>40<br>27.3<br>20,000 (20°C) |
| Method[9] | B |
| Temperature (°C) | 26 |
| Time (seconds) | 10 |
| Number of steps | 3 |
| Fresh Liquid[16] (L/min) | 2 |
| Rinsing Treatment | |
| Washing Solvent<br>Boiling Point[6]<br>Surface Tension[7]<br>Solubility in Water[8] | CH$_2$Cl$_2$<br>40<br>27.3<br>20,000 (20°C) |
| Method[9] | B |
| Temperature (°C) | 26 |
| Time (seconds) | 10 |
| Number of Steps | 2 |
| Fresh Liquid[16] (L/min) | 2 |
| Washing Solvent-Removing Treatment | |
| Suction Roll<br>Diameter (μm)<br>Size of Apertures (cm) | Wire Roll<br>10<br>100 |
| Suction Pressure (kPa) | 5 |
| Poor Solvent | Warm Water |
| Poor Solvent Temp. (°C) | 85 |
| Contact Time (seconds) | 1.18 |
| $(100-T)^3/(1100 \times P^{0.5} \times \log L)$ | 0.69 |
| Thermal Setting Treatment | |
| Temperature (°C) | 124 |
| Time (seconds) | 120 |
| Properties of Microporous Membrane | |
| Appearance | Poor |
| Thickness (μm) | 23.6 |
| Porosity (%) | 48 |
| Air Permeability[17] | 288 |
| Thermal Shrinkage Ratio[14]<br>MD (%)<br>TD (%) | <br>11.3<br>10.4 |

Note:

(1)-(15)    The same as in Table 2.

(16)    The amount of a fresh liquid supplied.

(17)    Air permeability (sec/100 cc) converted to that of a 20 μm-thick membrane.

As shown in Table 3, the microporous thermoplastic resin membranes of Examples 6-11 produced by the method of the present invention were particularly excellent in appearance and also excellent in porosity, air permeability and thermal shrinkage resistance. On the other hand, the microporous membranes of Comparative Examples 6-8 had poor appearance because of striped suction spots on the surface, because the contact time of the washed molding with the suction roll exceeded a range represented by the above general formula (1). Further, Comparative Example 6 was poorer in porosity and air permeability than Example 7 with the same conditions of removing the membrane-forming solvent, and Comparative Example 7 was also poorer in porosity and air permeability than Example 6 with the same conditions of removing the membrane-forming solvent.

EFFECT OF THE INVENTION

The first and second production methods of the present invention can quickly provide microporous thermoplastic resin membranes, while suppressing the evaporation of washing solvents used for removing membrane-forming solvents and the shrinkage of the membranes. The microporous thermoplastic resin membranes obtained by the first and second production methods of the present invention have not only excellent porosity, air permeability and thermal shrinkage resistance, but also excellent appearance because of no water spots (blister-like spots) and suction spots. The microporous membranes having such properties are suitable for battery separators, filters, etc.

**Claims**

1.  A method for producing a microporous thermoplastic resin membrane comprising the steps of extruding a solution obtained by melt-blending a thermoplastic resin and a membrane-forming solvent through a die, cooling an extrudate to form a gel-like molding, removing said membrane-forming solvent from said gel-like molding by a washing solvent, and removing said washing solvent, wherein said washing solvent has (a) a surface tension of 24 mN/m or less at a temperature of 25°C, (b) a boiling point of 100°C or lower at the atmospheric pressure, and (c) a solubility of 600 ppm (on a mass basis) or less in water at a temperature of 16°C; and wherein said washing solvent remaining in the washed molding is removed by using warm water without using a suction means.

2.  A method for producing a microporous thermoplastic resin membrane comprising the steps of extruding a solution obtained by melt-blending a thermoplastic resin and a membrane-forming solvent through a die, cooling an extrudate to form a gel-like molding, removing said membrane-forming solvent from said gel-like molding by a washing solvent, wherein a poor solvent to said washing solvent is caused to pass through the washed molding by a suction means to remove said washing solvent in a state that the washed molding is in contact with said poor solvent; and wherein the contact time $t$ (seconds) of said washed molding with said suction means is in a range meeting the following general formula (1):

$$t \leq (100\text{-}T)^3/(1{,}100 \times P^{0.5} \times \log L) \ldots (1),$$

wherein T is the temperature (°C) of said poor solvent, P is a suction pressure (kPa), and L is the size of penetrating apertures of said suction means for sucking said washing solvent [diameter (μm) of the largest circle inscribed in said penetrating apertures].

**Patentansprüche**

1. Verfahren zum Herstellen einer mikroporösen Membran aus thermoplastischem Harz, welches die Stufen umfasst, in denen eine Lösung, erhalten durch Schmelzmischen eines thermoplastischen Harzes und eines Membran bildenden Lösungsmittels, durch eine Düse extrudiert wird, ein Extrudat unter Bildung eines gelähnlichen Formartikels gekühlt wird, das Membran bildende Lösungsmittel mit Hilfe eines Waschlösungsmittels aus dem gelähnlichen Formartikel entfernt wird und das Waschlösungsmittel entfernt wird, wobei das Waschlösungsmittel (a) eine Oberflächenspannung von 24 mN/m oder weniger bei einer Temperatur von 25°C aufweist, (b) einen Siedepunkt von 100°C oder niedriger bei Atmosphärendruck hat und (c) eine Löslichkeit von 600 ppm (auf Massenbasis) oder weniger in Wasser bei einer Temperatur von 16°C aufweist, und wobei das Waschlösungsmittel, das in dem gewaschenen Formartikel verbleibt, ohne Einsatz von Saugmitteln unter Verwendung von warmem Wasser entfernt wird.

2. Verfahren zum Herstellen einer mikroporösen Membran aus thermoplastischem Harz, welches die Stufen umfasst, in denen eine Lösung, erhalten durch Schmelzmischen eines thermoplastischen Harzes und eines Membran bildenden Lösungsmittels, durch eine Düse extrudiert wird, ein Extrudat unter Bildung eines gelähnlichen Formartikels gekühlt wird, das Membran bildende Lösungsmittel mit Hilfe eines Waschlösungsmittels von dem gelähnlichen Formartikel entfernt wird, wobei bewirkt wird, dass ein zu dem Waschlösungsmittel schwaches Lösungsmittel mit Hilfe eines Saugmittels durch den gewaschenen Formartikel geleitet wird, um das Waschlösungsmittel in einem Zustand, bei dem der gewaschene Formartikel mit dem schwachen Lösungsmittel in Berührung ist, entfernt wird, und wobei die Kontaktdauer $t$ (Sekunden) des gewaschenen Formartikels mit dem Saugmittel im Bereich der folgenden allgemeinen Formel (1) ist:

$$t \leq (100-T)^3/(1100 \mathrm{x} P^{0,5} \times \log L) \ \ldots\ldots\ (1),$$

wobei T die Temperatur (°C) des schwachen Lösungsmittels ist, P ein Saugdruck (kPa) ist und L die Größe der Öffnungen des Saugmittels zum Saugen des Waschlösungsmittels ist [Durchmesser ($\mu$m) des größten in den Öffnungen beschriebenen Kreises].

**Revendications**

1. Procédé de production d'une membrane de résine thermoplastique microporeuse, comprenant les étapes consistant à extruder une solution obtenue en mélangeant à l'état fondu une résine thermoplastique et un solvant formant une membrane à travers une filière, à refroidir un extrudat pour former un moulage de type gel, à enlever ledit solvant formant une membrane à partir dudit moulage de type gel par un solvant de lavage, et à enlever ledit solvant de lavage, dans lequel ledit solvant de lavage a (a) une tension superficielle de 24 mN/m ou moins à une température de 25 °C, (b) un point d'ébullition de 100 °C ou moins à la pression atmosphérique, et (c) une solubilité de 600 ppm (sur la base de la masse) ou moins dans l'eau à une température de 16 °C ; et dans lequel ledit solvant de lavage restant dans le moulage lavé est enlevé en utilisant de l'eau chaude, sans utiliser un moyen d'aspiration.

2. Procédé pour produire une membrane de résine thermoplastique microporeuse, comprenant les étapes consistant à extruder une solution obtenue en mélangeant à l'état fondu une résine thermoplastique et un solvant formant une membrane à travers une filière, à refroidir un extrudat pour former un moulage de type gel, à enlever ledit solvant formant une membrane à partir dudit moulage de type gel par un solvant de lavage, dans lequel il est fait en sorte qu'un solvant faible par rapport audit solvant de lavage passe à travers le moulage lavé par un moyen d'aspiration pour enlever ledit solvant de lavage dans un état où le moulage lavé est en contact avec ledit solvant faible ; et dans lequel le temps de contact t (secondes) dudit moulage lavé avec ledit moyen d'aspiration est dans une gamme répondant à la formule générale (1) suivante :

$$t \leq (100-T)^3/(1\ 100 \times P^{0,5} \times \log L) \quad (1),$$

dans laquelle T est la température (°C) dudit solvant faible, P est une pression d'aspiration (kPa) et L est la dimension des ouvertures pénétrantes dudit moyen d'aspiration pour aspirer ledit solvant de lavage [diamètre ($\mu$m) du plus grand cercle inscrit dans lesdites ouvertures pénétrantes].

[ Fig. 1]

[ Fig. 2 ]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002256099 A
- JP 2003082151 A
- JP 2630870 B
- JP 2899226 B
- JP 63247251 A
- JP 63267648 A
- JP 4260561 A
- JP 8133536 A
- JP 8208100 A
- JP 9067053 A
- JP 2002160857 A
- JP 2002255423 A